Europäisches Patentamt

(19) European Patent Office

Office européen des brevets

(11) Numéro de publication : **0 324 683 B1**

(12) **FASCICULE DE BREVET EUROPEEN**

(45) Date de publication du fascicule du brevet :
20.03.91 Bulletin 91/12

(21) Numéro de dépôt : 89400076.9

(22) Date de dépôt : **10.01.89**

(51) Int. Cl.⁵ : **B64C 25/66, B64F 1/22**

(54) **Dispositif d'augmentation de la stabilité des hélicoptères embarqués et posés, à train d'atterrissage tricycle, et hélicoptère équipé d'un tel dispositif.**

(30) Priorité : 15.01.88 FR 8800443

(43) Date de publication de la demande :
19.07.89 Bulletin 89/29

(45) Mention de la délivrance du brevet :
20.03.91 Bulletin 91/12

(84) Etats contractants désignés :
**DE GB IT NL**

(56) Documents cités :
US-A- 2 454 611
NAVY TECHNICAL DISCLOSURE BULLETIN,
vol. 4, no. 11, novembre 1979, pages 11-15,
Navy Techn. Catalog no. 7840, Navy Case no.
61558; F.L. SHEETZ et al.: "VTOL aircraft hol-
d-down device"

(73) Titulaire : **AEROSPATIALE Société Nationale Industrielle**
**37, Boulevard de Montmorency**
**F-75781 Paris Cédex 16 (FR)**

(72) Inventeur : **Bernard, Louis Arthur**
**6 Boulevard des Oliviers**
**F-13700 Saint Victoret (FR)**
Inventeur : **Thomassin, René**
**Chemin des Espradeaux**
**F-13880 Velaux (FR)**

(74) Mandataire : **Bérogin, Francis et al**
**c/o CABINET HARLE & PHELIP 21 rue de la**
**Rochefoucauld**
**F-75009 Paris (FR)**

## Description

La présente invention concerne un dispositif d'augmentation de la stabilité des hélicoptères embarqués, à train d'atterrissage tricycle, lorsqu'ils sont posés.

Plus précisément, l'invention se rapporte à un tel dispositif permettant d'améliorer, après leur appontage, la stabilité en particulier transversale des hélicoptères embarqués, dont le train d'atterrissage, du type dit "tricycle", comporte deux atterrisseurs principaux et latéraux, fixes ou relevables à une seule roue ou à roues jumelées, par exemple disposées côte à côte selon un montage dit "en diabolo", et un atterrisseur auxiliaire, qui est soit un atterrisseur avant fixe ou relevable, à une seule roue ou à roues jumelées, soit un atterrisseur essentiellement limité à une roulette arrière.

Un dispositif selon l'invention est destiné à améliorer la tenue au renversement latéral de tels hélicoptères, avec ou sans vent de travers, et après qu'ils se soient posés sur une plate-forme mouvante, telle qu'une plate-forme d'appontage et de décollage d'un navire, par exemple un porte-aéronefs, ou encore un pont "hélicoptère" d'une plate-forme de travail en mer, notamment du type "auto-élévatrice", qui est amenée à se déplacer comme une barge d'un site de travail à un autre, et est alors soumise aux effets des vagues et de la houle, et donc à des mouvements de roulis et tangage, et cette tenue améliorée au renversement latéral des hélicoptères doit être assurée non seulement en statique, sur l'aire mouvante d'appontage et de décollage, mais également au roulage, pendant les déplacements des hélicoptères sur cette aire et entre celle-ci et un garage ou hangar prévu sur le navire ou la plate-forme pour abriter les hélicoptères.

Pour les hélicoptères devant apponter sur une plate-forme mouvante, il est déjà connu par le brevet français N° 1 241 147 d'équiper leur train d'atterrissage d'un dispositif à adhérence commandée, comportant un grand nombre de ventouses montées escamotables à la partie inférieure de fuseaux de flottabilité dont est équipé l'hélicoptère. Ces ventouses sont portées en grand nombre par une toile caoutchoutée fermant l'ouverture inférieure d'une coquille rigide semi-cylindrique, ouverte vers le bas, et rigidement montée à l'intérieur de la partie inférieure de chaque fuseau de flottabilité. Dans le logement délimité entre la toile caoutchoutée porte-ventouses et la coquille rigide, à l'intérieur de celle-ci, est disposée une vessie étanche solidarisée par endroits d'une part à la coquille rigide et d'autre part à la toile, laquelle présente de nombreux ajours, latéralement par rapport aux ventouses centrales, dont chacune desquelles est également percée d'un petit canal central. La vessie étanche peut être pressurisée à partir d'une prise d'air comprimé sur la sortie du compresseur d'une turbine de l'hélicoptère, ou mise en dépression par aspiration de l'air qu'elle contient au moyen d'un éjecteur dont l'ajutage central est directement alimenté à partir de cette prise d'air. La pressurisation de la vessie assure son gonflage sous la forme d'un boudin cylindrique qui repousse la toile porte-ventouses et les ventouses en saillie vers l'extérieur de la coquille rigide, donc en saillie sous le fuseau de flottabilité correspondant, et, simultanément, l'occultation des petits canaux centraux de mise à l'air libre des ventouses. Inversement, la mise en dépression de la vessie rétracte la toile porte-ventouses et les ventouses vers l'intérieur de la coquille, et assure la mise à l'air libre des petits canaux centraux des ventouses.

Avant d'effectuer la présentation de l'hélicoptère pour l'appontage, le pilote s'assure que la vessie est pressurisée, et donc que les ventouses sont sorties, en vue de l'appontage, et prêtes à adhérer sur la plate-forme. Au moment de l'impact à l'appontage, l'adhérence des ventouses sur la plate-forme résulte quasi-instantanément de l'expulsion de l'air par les bords de celles-ci au cours de leur écrasement sous l'effet du poids réparti de l'hélicoptère, ce qui empêche tout rebond et fixe l'hélicoptère à la plate-forme, le grand nombre de ventouses permettant de pallier le défaut d'adhérence éventuel de certaines d'entre elles, en raison de la qualité de l'état de surface de la plate-forme ou de sa salissure.

Pour décoller, le pilote commande la dépression de la vessie au moment où il tire sur la commande de pas général de l'hélicoptère, de sorte que cette dépression assure la mise à l'air libre simultanée de toutes les ventouses, en même temps que la rétraction de la toile porte-ventouses vers l'intérieur de la coquille rigide, de sorte que l'hélicoptère est instantanément libéré de la plate-forme.

Ainsi, ce dispositif à adhérence commandée constitue un dispositif de fixation de l'hélicoptère sur la plate-forme, ou encore un moyen autonome d'amarrage rapide, comportant de nombreux points d'ancrage dont chacun correspond à une ventouse, et pour lesquels l'amarrage et le largage sont simultanés. Il en résulte qu'un tel dispositif assure effectivement une augmentation de stabilité de l'hélicoptère posé, et donc une amélioration de la tenue au renversement de cet hélicoptère, mais en statique seulement. Un tel dispositif est inutilisable pendant le roulage, et il s'oppose même à celui-ci, lorsqu'il est actif, c'est-à-dire lorsque l'adhérence des ventouses est utilisée. En conséquence, pour permettre le roulage, il est nécessaire de mettre ce dispositif hors fonction, de sorte que la stabilité améliorée qu'il procurait en statique n'est plus alors assurée. Il est donc nécessaire d'utiliser un autre dispositif, tel qu'un chariot, pour le roulage, ce chariot de manutention devant être glissé sous l'hélicoptère posé, alors que la vessie est maintenue en pression, le chariot de manutention étant adapté pour permettre le déplacement de l'hélicoptère une fois la vessie dégonflée, et par conséquent les ventouses escamotées. Un tel chariot auxiliaire est absolument indispensable, car, dans le cas où l'hélicoptère comporte un train d'atterrissage à roues, les atterrisseurs de ce train ne sont pas utilisables, du fait que, dans ce cas, l'utilisation du dispositif à adhérence commandée suppose précisément que le train d'atterrissage à roues soit escamoté ou déposé, en vue d'une mise en oeuvre de l'hélicoptère correspondant sur une plate-forme mouvante.

En effet, le dispositif à adhérence commandée selon ce brevet français ne peut être utilisé que sur les hélicoptères équipés d'un train à flotteurs, ou d'un train à roues à la condition que l'hélicoptère soit de plus équipé d'un dispositif de flottabilité de secours à fuseaux flottants disposés à sa partie inférieure, ou encore que l'hélicoptère soit un hélicoptère hydro ou amphibie, mais dans ces derniers cas le train d'atterrissage à roues doit toujours être escamoté ou déposé pour que le dispositif à ventouses escamotables puisse être utilisé.

En conclusion, le dispositif à adhérence commandée par ventouses escamotables selon ce brevet français est fonctionnellement incompatible avec un train d'atterrissage tricycle, dont les deux atterrisseurs principaux et l'atterrisseur auxiliaire avant ou arrière sont effectivement utilisés pour les appontages et décollages sur une plate-forme mouvante.

Par le brevet français 2 544 280, on connaît également un train d'atterrissage notamment pour hélicoptère amphibie, dont la flottaison est assurée par le fuselage proprement dit de l'hélicoptère, et pour lequel il est nécessaire d'assurer équilibre transversal. Le train d'atterrissage est conçu de façon à assurer, d'une part, la fonction normale d'atterrisseur sur terre ou sur une plate-forme, et, d'autre part, la stabilisation transversale de l'appareil sur l'eau ou à flot, dans la mesure où la flottaison est assurée par le fuselage de l'hélicoptère. A cet effet, chacun des deux atterrisseurs principaux et latéraux est articulé sur le fuselage autour d'un axe incliné dans le plan horizontal et la jambe correspondante de l'atterrisseur est pourvue d'une roue et d'un carénage en forme de flotteur, et chaque atterrisseur principal est manoeuvré par un dispositif de commande permettant de le déplacer d'une position basse, convenable pour un atterrissage ou un décollage sur terre ou sur plateforme, et une position haute, dans laquelle le carénage-flotteur assure la stabilité latérale à flot et présente une incidence correcte pour l'hydroplanage.

Il est clair qu'un tel dispositif augmente la stabilité latérale de l'hélicoptère uniquement lorsque ce dernier est posé sur l'eau, car, lorsqu'il est posé sur terre, ou sur une plate-forme rigide, les atterrisseurs à roues qui constituent les stabilisateurs latéraux à flot, sont utilisés de manière classique, et ne procurent donc aucune augmentation ou amélioration de la stabilité.

Par ailleurs, on connaît de nombreuses réalisations de dispositifs ou d'outillages destinés exclusivement à faciliter les déplacements sur le sol d'hélicoptères équipés uniquement de train d'atterrissage à patins.

A titre d'exemple, on connaît par le brevet anglais 1 382 265 un chariot de remorquage comprenant un châssis monté sur des roues à chaque extrémité, muni d'une commande de direction à une extrémité et déplacé par un moteur qui entraîne les roues à l'autre extrémité, le châssis supportant un dispositif de halage pour produire un déplacement relatif entre le chariot et un hélicoptère à patins, et le chariot est équipé de deux voies de préférence munies de galets, pour recevoir les patins de l'hélicoptère, le dispositif de halage étant de préférence entraîné par le même moteur que les roues du chariot.

Il est clair qu'un tel chariot est un dispositif relativement lourd et encombrant, car il doit non seulement être équipé d'un moteur et de son alimentation en énergie, pour déplacer l'hélicoptère, mais il doit également porter ce dernier, et à cet effet disposer d'une assistance au levage de l'hélicoptère pour son chargement sur le chariot. En outre, un tel chariot porteur, spécifiquement adapté au déplacement des hélicoptères à patins, ne procure aucune augmentation de la stabilité latérale de l'hélicoptère, en particulier pendant le chargement sur le chariot, du fait que l'avant ou l'arrière de l'hélicoptère doit être légèrement levé, et même d'une manière générale, lorsque l'hélicoptère repose sur le chariot porteur, en statique comme pendant le roulage du chariot, du fait que les points de contact du chariot porteur avec le sol, à savoir les roues du chariot porteur, sont disposées à l'intérieur des patins, donc plus proches du plan longitudinal et médian de l'hélicoptère, et, pour ce qui concerne les points de contact à l'avant du chariot, plus proches du centre de gravité de l'hélicoptère, d'une part, et que, d'autre part, le centre de gravité de l'hélicoptère est surélevé par rapport à sa position lorsque l'hélicoptère repose sur ses patins. En conclusion, la stabilité, en particulier transversale, d'un hélicoptère à train d'atterrissage à patins est diminuée lorsque ce dernier repose sur un tel chariot de déplacement au sol.

Il en est de même lorsqu'on utilise un chariot selon le brevet US 4 033 422, qui décrit un petit chariot dont le châssis auto-moteur est équipé d'au moins deux roues coaxiales, d'un moteur d'entraînement des roues et d'un système de levage à vérin destiné à venir en contact avec un point résistant sur la face inférieure de la structure de l'hélicoptère. Ce châssis est muni d'un bras de commande de direction dont la poignée de manoeuvre est munie des organes de commande du moteur d'entraînement et du vérin de levage, et ce petit chariot est utilisé en combinaison avec deux trains auxiliaires à roues dont chacun est destiné à être fixé à l'arrière de l'un des deux patins de l'hélicoptère.

Un tel chariot de manoeuvre est relativement coûteux, lourd et complexe, du fait qu'il emporte des batteries électriques pour l'alimentation du moteur d'entraînement des roues ainsi que d'un moteur d'entraînement d'une pompe d'un circuit hydraulique d'alimentation en puissance du vérin de levage. Comme précédemment, la stabilité latérale de l'hélicoptère pris en charge par le chariot de manoeuvre et ses trains de roulement arrière auxiliaires, est diminuée en statique comme au roulage, du fait de l'appui "trois points" sur le sol, au niveau, d'une part, des roues du chariot, disposées à l'avant entre les deux patins, et, d'autre part, au niveau des trains de roulement auxiliaires à l'arrière des patins.

En conclusion, de tels chariots de manoeuvre sont inutilisables sur les plates-formes mouvantes du fait qu'ils diminuent la stabilité surtout latérale des hélicoptères à patins qu'ils transportent, et d'autre part, ils sont spécifiquement adaptés aux hélicoptères à train d'atterrissage à patins, et ne peuvent être utilisés sur des hélicoptères à train d'atterrissage tricycle, dont les atterrisseurs sont utilisés à l'appontage comme au décollage sur de telles plates-formes mouvantes.

Il faut noter de plus que de tels chariots de manoeuvre, qui se glissent sous les hélicoptères à patins, sont incompatibles avec la plupart des dispositifs d'aide à l'appontage, par exemple du type "grille-harpon", dont les plates-formes mouvantes peuvent être avantageusement pourvues afin d'assurer une excellente tenue au renversement des hélicoptères qu'elles reçoivent.

Il faut encore noter que les hélicoptères embarqués ne sont en général pas équipés de train d'atterrissage à patins, car ces types d'atterrisseurs ne présentent pas suffisamment d'élasticité et n'assurent pas suffisamment d'amortissement dans le sens vertical, pour permettre dans de bonnes conditions un atterrissage sur une plate-forme mouvante, en particulier dès que la composante verticale de la vitesse de déplacement relatif de l'hélicoptère et de la plate-forme dépasse 3 m/s. Par ailleurs, comme déjà évoqué ci-dessus à propos des brevets anglais et américain, les trains d'atterrissage à patins ne permettent pas, sans l'assistance de dispositif auxiliaire, de déplacer les hélicoptères sur les plates-formes d'appontage avec une sécurité suffisante, en particulier pour le freinage.

Pour ces différentes raisons, la grande majorité des hélicoptères embarqués est constituée d'hélicoptères équipés de train d'atterrissage à roues. Compte-tenu du nombre assez limité d'hélicoptères embarqués, ceux-ci sont des appareils en général dérivés d'hélicoptères conçus et étudiés pour une mise en oeuvre à partir de bases situées sur le sol ferme ou de plates-formes terrestres, éventuellement en pente, mais jamais mouvantes. En conséquence, ces hélicoptères sont donc munis de train d'atterrissage de type tricycle, à atterrisseur auxiliaire avant ou arrière, et dont les deux atterrisseurs principaux et latéraux présentent une voie relativement faible, afin d'être moins lourds et d'occassionner une trainée aérodynamique aussi faible que possible. Mais du fait de la voie relativement faible des atterrisseurs principaux, ces trains d'atterrissage tricycles ne donnent pas aux hélicoptères qui en sont équipés une stabilité latérale suffisante pour permettre, sans risque de basculement, surtout latéralement, l'embarquement de ces hélicoptères sur le pont de navires subissant, avec leurs plates-formes d'appontage, de forts mouvements de roulis et tangage, comme c'est le cas par exemple des frégates et corvettes, avec de plus la possibilité de rencontrer également de forts vents latéraux gênants pour les appontages et décollages, ainsi que pour les manoeuvres des hélicoptères posés, comme c'est le cas par exemple sur le pont de porte-aéronefs (porte-hélicoptères ou porte-avions).

On rappelle que, lorsqu'un hélicoptère veut se poser sur une plate-forme terrestre en pente, il se présente face à la pente, et, après s'être posé sur la plate-forme, il utilise donc, pour se maintenir sur cette dernière, sa stabilité longitudinale qui est en général largement supérieure à sa stabilité transversale ou latérale. Mais pour un hélicoptère embarqué souhaitant apponter sur une plate-forme mobile suivant tous les axes, cette procédure d'appontage ne peut pas être adoptée.

Pour une meilleure perception du problème posé, on rappelle que la stabilité statique latérale moyenne d'un hélicoptère à train tricycle avec atterrisseur auxiliaire avant est d'environ 20°, ce qui signifie sensiblement que le plan longitudinal et médian passant par le centre de gravité de l'hélicoptère peut être incliné d'un angle maximum de 20° sur la verticale sans risque de basculement latéral de l'hélicoptère. Cette stabilité est certes suffisante pour une utilisation terrestre civile de l'hélicoptère, mais la stabilité statique souhaitable pour un hélicoptère embarqué est d'environ 30°.

Pour porter l'angle critique d'inclinaison latérale à environ 30° sur des hélicoptères à train tricycle avec atterrisseur auxiliaire avant, une première solution évidente consiste à augmenter la voie des atterrisseurs principaux. Mais l'amélioration de la stabilité par l'augmentation de la voie des atterrisseurs principaux présente de nombreux inconvénients, car elle nécessite une modification structurale importante de l'hélicoptère de base, une certification des nouveaux atterrisseurs, et elle entraîne une augmentation de l'encombrement de l'hélicoptère au sol, une trainée aérodynamique plus importante et donc des pertes de performance très sensibles, ainsi que l'obligation pratique d'augmenter le diamètre de la surface utile sur la plate-forme d'appontage, et les dimensions d'un éventuel dispositif d'aide à l'appontage équipant cette plate-forme, par exemple un dispositif comportant une grille implantée dans la partie centrale de l'aire d'appontage et coopérant avec un harpon monté sous l'hélicoptère.

Le but de l'invention est de remédier à ces inconvénients et de permettre l'amélioration de la stabilité, en particulier latérale, d'un hélicoptère embarqué à train d'atterrissage tricycle, dont les atterrisseurs sont effectivement utilisés à l'appontage comme au décollage ainsi que pour le roulage de l'hélicoptère lorsque ce dernier est posé sur la plate-forme mouvante, et cela sans qu'il soit nécessaire d'effectuer une modification structurale importante de l'hélicoptère, tel qu'il est conçu pour une utilisation terrestre, et donc sans nécessiter de nouvelles modifications des atterrisseurs principaux et latéraux, sans provoquer d'augmentation de l'encombrement au sol, de la traînée aérodynamique en vol, et donc sans être à l'origine de pertes de performances sensibles.

Un autre but de l'invention est de permettre d'utiliser, dans des conditions extrêmes de mise en oeuvre marine, avec de forts mouvements de plate-forme et vents latéraux, des hélicoptères embarqués équipés de train d'atterrissage tricycle étudiés pour leur mise en oeuvre terrestre, sans supplément important de coût ou de poids, et autorisant, sans autre outillage complémentaire, les déplacements de ces hélicoptères sur le pont de bateaux par roulage et en utilisant les roues du train d'atterrissage tricycle ainsi que leur système de freinage.

Un autre but encore de l'invention est d'améliorer ou d'augmenter la stabilité, en particulier latérale, des hélicoptères embarqués à train d'atterrissage tricycle, lorsqu'ils sont posés sur une plate-forme mouvante, à l'aide d'un dispositif de structure simple, de faible poids et encombrement, donc d'un coût de réalisation et d'entretien modique, ce dispositif étant simultanément indépendant de tout dispositif d'amarrage d'hélicoptère sur plate-forme mouvante, après appontage et avant décollage, tout en pouvant s'accomoder des différents types connus de tels dispositifs d'aide à l'appontage, c'est-à-dire que le dispositif d'augmentation de stabilité selon l'invention doit pouvoir être utilisé aussi bien en statique que pour les roulages de l'hélicoptère sur la plate-forme mouvante, sans gêner le fonctionnement d'un tel dispositif d'aide à l'appontage et sans être gêné par ce dernier.

Pour atteindre ces buts, le principe à la base de l'invention ne consiste pas à augmenter la voie des atterrisseurs principaux du train tricycle ni à jouer sur l'adhérence, mais à augmenter le nombre des points d'appui de l'hélicoptère sur la surface d'appontage, sans cependant trop sortir de la projection sur cette surface du fuselage de l'hélicoptère, les nouveaux points d'appui étant choisis de part et d'autre du plan longitudinal et médian de l'hélicoptère et écartés de la trace du centre de gravité sur le plan de la surface d'appontage, afin d'augmenter le polygone de sustentation.

L'idée à la base de l'invention consiste à améliorer la stabilité en particulier latérale d'un hélicoptère à train d'atterrissage tricycle et embarqué sur une plate-forme mouvante par ajout d'au moins deux roues latérales supplémentaires, sans modifier très sensiblement la structure de base de l'appareil ni le train d'atterrissage tricycle d'origine, pour porter l'angle critique d'inclinaison à environ 30°, ces roues latérales supplémentaires étant soit rétractables, et donc relevées avant le décollage et abaissées après l'appontage par une commande hydraulique ou électrique manoeuvrée par le pilote, soit simplement mises en place et démontables manuellement par un mécanisme d'accouplement rapide, respectivement à la suite de l'appontage et avant le décollage, auquel cas lesdites roues latérales supplémentaires peuvent être combinées à des éléments d'attelage et de remorquage, constitutifs d'un chariot de stabilisation et de remorquage.

Plus précisément, l'invention propose un dispositif d'augmentation de la stabilité, en particulier latérale, d'un hélicoptère embarqué, à train d'atterrissage tricycle, lorsqu'il est posé sur une plate-forme mouvante, et qui se caractérise en ce qu'il comprend un train stabilisateur auxiliaire, comportant au moins deux stabilisateurs latéraux, dont chacun comporte un support rigide, qui supporte, par une partie d'extrémité, au moins une roue stabilisatrice de contact avec la plate-forme, et qui est, au moins en position d'utilisation, solidarisé à la structure résistante de l'hélicoptère à la partie inférieure du fuselage de ce dernier, et décalé latéralement sur l'un respectivement des deux côtés du plan longitudinal vertical et médian de l'hélicoptère, et dans la direction tournée vers l'atterrisseur auxiliaire par rapport aux atterrisseurs principaux et latéraux du train d'atterrissage tricycle, de sorte que les roues stabilisatrices prennent appui sur ladite plate-forme mouvante de part et d'autre dudit plan longitudinal et médian de l'hélicoptère, lorsque ce dernier repose sur cette plate-forme par son train d'atterrissage tricycle.

Il est certain que l'amélioration ou l'augmentation de la stabilité ainsi obtenue par le montage, sous l'hélicoptère, d'un train stabilisateur auxiliaire, nécessite un renforcement très localisé de la structure résistante de base de l'appareil, mais n'engendre pas de modification structurale conséquente de cet appareil, ni l'homologation en vol des stabilisateurs latéraux du fait que ces derniers ne participent pas à la reprise des efforts d'appontage. En outre, un tel dispositif d'augmentation de stabilité n'engendre aucune augmentation de l'encombrement au sol de l'hélicoptère, qui utilise son train d'atterrissage tricycle aux appontages comme aux décollages, et bénéficie de l'assistance des stabilisateurs latéraux du train stabilisateur auxiliaire pour avoir une grande stabilité, en particulier latérale ou transversale, non seulement lorsqu'il est posé sur la plate-forme mouvante d'appontage, mais également aux roulages entre cette plate-forme et un hangar logeant l'hélicoptère en dehors de ses missions.

Afin de faciliter le montage du train stabilisateur auxiliaire, et toutes les interventions sur ce dernier, et afin de modifier également le moins possible la structure de base de l'hélicoptère, tout en bénéficiant d'un large polygone de sustentation, il est avantageux que le support rigide de chacun des stabilisateurs latéraux soit monté en saillie latéralement par rapport à la partie inférieure du fuselage et sur l'un respectivement des deux côtés de ce fuselage. Un tel dispositif d'augmentation de la stabilité permet de porter l'angle critique à environ 30°, ce qui autorise l'utilisation des hélicoptères embarqués qui en sont équipés dans des conditions extrêmes de mise en oeuvre marine, lorsque la plate-forme mouvante est soumise à des mouvements de forte amplitude et balayée par des vents latéraux violents.

Afin de faciliter les manoeuvres et déplacements d'hélicoptères embarqués et équipés d'un dispositif d'augmentation de stabilité selon l'invention, sur les ponts des navires, il est avantageux que, sur chacun des stabilisateurs latéraux du train stabilisateur auxiliaire, le support rigide correspondant comporte une jambe qui présente, au moins en position d'utilisation, au moins une partie d'extrémité inférieure sensiblement verticale supportant chaque roue du stabilisateur latéral correspondant, qui est, d'une part montée librement tourillonnante autour de l'axe sensiblement vertical de ladite partie d'extrémité inférieure de jambe, et, d'autre part, montée libre en rotation autour de son axe propre.

Selon le meilleur mode de réalisation connu de la demanderesse à ce jour, la jambe du support rigide comporte un fût tubulaire présentant un alésage interne rectiligne, dont l'axe est, au moins en position d'utilisation de la jambe, sensiblement vertical, et dans lequel est engagée une tige qui tourillonne librement autour de son axe et dont une partie d'extrémité, en saillie à l'extérieur du fût tubulaire, supporte au moins une roue stabilisatrice tournant autour de son axe perpendiculaire à celui du fût tubulaire.

Afin d'améliorer encore le comportement au roulage des stabilisateurs latéraux, il est avantageux que la partie d'extrémité de tige en saillie hors du fût tubulaire de la jambe soit conformée en chape porte-roue, dans laquelle chaque roue stabilisatrice correspondante est montée en rotation autour de son axe propre, qui est décalé par rapport à l'axe de la tige, de sorte que chaque roue stabilisatrice est entraînée en roue tirée lorsque l'hélicoptère est déplacé sur le plate-forme mouvante.

Afin de favoriser l'appui de chaque roue stabilisatrice contre la plate-forme mouvante, et, en cas d'inclinaison latérale de l'hélicoptère, afin d'exercer sur ce dernier un effort de rappel vers sa position stable, la tige et chaque roue qu'elle supporte sont avantageusement repoussées élastiquement vers l'extérieur du fût de la jambe de chaque stabilisateur latéral par au moins un organe de rappel élastique à grande raideur, qui est avantageusement au moins partiellement logé dans le fût et/ou autour de la tige.

En outre, pour permettre d'ajuster la hauteur de chaque stabilisateur latéral du train stabilisateur auxiliaire en fonction de la masse de l'hélicoptère, il est avantageux que chaque stabilisateur latéral comporte un mécanisme de réglage de la position d'au moins une roue stabilisatrice correspondante en hauteur vis-à-vis du fuselage de l'appareil. Ce mécanisme de réglage en hauteur d'une roue stabilisatrice peut comprendre un vérin hydraulique logé dans le fût tubulaire de la jambe et qui assure un réglage axial de la position dans ce fût de la tige supportant la roue stabilisatrice. Avantageusement, ce mécanisme de réglage en hauteur d'au moins une roue stabilisatrice est un mécanisme comprenant une roue dentée manoeuvrée par une manivelle et en prise avec un pignon d'entrainement en rotation d'une vis sans fin en position axiale fixe vis-à vis du fût tubulaire dans lequel elle est au moins partiellement logée, et en prise avec un coulisseau guidé en translation axiale dans ledit fût et dans lequel est montée tourillonnante une fusée supportant la ou les roues stabilisatrices.

Compte-tenu de la position préférée de chaque jambe de stabilisateur latéral, en léger déport latéral par rapport à la partie inférieure du fuselage, et d'un côté de ce dernier, le support rigide de chaque stabilisateur latéral comporte également un organe rigide et sensiblement transversal, lié à la jambe correspondante et reliant cette dernière à la structure résistante de l'hélicoptère.

Selon une première variante préférée de réalisation, chaque stabilisateur latéral est relié à demeure à la structure de l'hélicoptère et emporté en vol par ce dernier, et le stabilisateur latéral n'est éventuellement démonté et déposé de cette structure de l'hélicoptère que pour des opérations de maintenance et d'entretien.

Dans ce cas, les stabilisateurs latéraux peuvent être stationnaires, et tels que leurs supports rigides soient maintenus dans des positions fixes vis-à-vis de la structure de l'hélicoptère, mais une telle réalisation est désavantageuse dans la mesure où elle entraîne une traînée aérodynamique sensible, occasionnant des pertes de performance notables. Pour cette raison, et selon le meilleur mode de réalisation connu de la demanderesse, les stabilisateurs latéraux sont escamotables, et chacun d'eux comprend un support rigide monté mobile entre deux positions extrêmes vis-à-vis du fuselage de l'hélicoptère, et dans chacune desquelles il est destiné à être verrouillé, l'une de ces deux positions étant une position d'utilisation, dans laquelle la ou les roues stabilisatrices correspondantes sont descendues par rapport au fuselage, et l'autre est une position de repos, dans laquelle la ou les roues correspondantes sont relevées sensiblement au niveau du fuselage, le support rigide étant déplacé de l'une à l'autre de ces deux positions par au moins un actionneur de manoeuvre.

Dans cette configuration de train de stabilisation auxiliaire à stabilisateurs latéraux escamotables, il est avantageux que l'organe rigide sensiblement transversal qui relie la jambe de chaque stabilisateur à la structure de l'hélicoptère soit un axe de pivot sensiblement horizontal et sensiblement perpendiculaire au plan longitudinal vertical et médian de l'hélicoptère, et avec lequel ou autour duquel la jambe correspondante est montée pivotante en direction sensiblement longitudinale, au moins un actionneur de manoeuvre étant un vérin, et la jambe étant de plus contreventée en position descendue par au moins une contrefiche.

Selon une réalisation simple et peu coûteuse, chaque jambe de stabilisateur latéral est pivotée par un unique vérin hydraulique ou électrique de manoeuvre et de contreventement, faisant simultanément fonction de contrefiche pour contreventer la jambe en position descendue.

Dans cet exemple, pour que les stabilisateurs latéraux escamotés n'offrent pratiquement aucune traînée aérodynamique supplémentaire, et pour ne pas avoir à modifier le fuselage et la structure de base de l'hélicoptère, il est avantageux que chaque stabilisateur latéral soit logé, en position relevée, dans une trappe aménagée dans un petit caisson latéral et caréné, fixé sur le côté correspondant de la partie inférieure du fuselage.

Une telle configuration a pour avantage que la mise en oeuvre du dispositif d'augmentation de stabilité de l'hélicoptère est à la libre disposition du pilote de ce dernier, qui est donc autonome et peut descendre les stabilisateurs latéraux après l'appontage et les relever avant le décollage, sans nécessiter d'assistance de personnels de pont.

Cependant, si l'on préfère limiter au maximum l'augmentation de poids résultant pour l'hélicoptère de son adaptation au montage d'un tel dispositif d'augmentation de stabilité, c'est-à-dire si l'on veut limiter l'augmentation du poids de l'hélicoptère au poids des éléments structuraux de faible importance qui doivent lui être adjoints pour la fixation des stabilisateurs latéraux, et si l'on souhaite simultanément ne pas augmenter la traînée aérodynamique par l'emport des stabilisateurs latéraux, il est avantageux, selon un autre mode de réalisation propre à l'invention, que le train stabilisateur auxiliaire soit un train additionnel, se montant sur l'hélicoptère en adjonction au train d'atterrissage tricycle après l'appontage sur ladite plate-forme mouvante, et se démontant avant le décollage de l'hélicoptère, et dont le support rigide de chaque stabilisateur se solidarise latéralement de manière amovible sur la structure de l'hélicoptère.

Avantageusement, pour que la stabilité améliorée soit assurée immédiatement après l'appontage et jusqu'aux derniers instants avant le décollage, il est avantageux que la solidarisation amovible de chaque stabilisateur latéral à la structure de l'hélicoptère soit assurée par un mécanisme d'accouplement et de désaccouplement rapide, à actionnement manuel, pouvant être facilement et rapidement mis en oeuvre par un personnel de pont procurant son assistance à l'hélicoptère, qui n'est donc plus autonome dans l'utilisation du dispositif d'augmentation de stabilité, mais dont la charge de travail du pilote est en même temps diminuée, l'hélicoptère étant de plus allégé et présentant une moindre traînée aérodynamique que dans la variante présentée ci-dessus, dans laquelle les stabilisateurs latéraux sont à demeure sur l'hélicoptère et escamotables sur ce dernier.

Dans la configuration du dispositif d'augmentation de stabilité, telle que présentée ci-dessus, il est avantageux que l'organe rigide sensiblement transversal reliant la jambe de chaque stabilisateur à la structure de l'hélicoptère soit un bras latéral solidaire de la jambe et qui s'emmanche sur et/ou dans au moins un élément de cette structure résistante, sur laquelle il est retenu de manière amovible par l'engagement manuel d'au moins une broche dans des orifices coïncidants ménagés dans le bras et dans au moins un élément de cette structure résistante de l'hélicoptère.

Dans cette variante, chaque stabilisateur latéral du train stabilisateur auxiliaire est donc amovible individuellement et indépendamment de l'autre, de sorte que les risques d'interférence d'un tel dispositif avec un dispositif d'aide à l'appontage, par exemple du type grille-harpon et/ou à chariot et à barre de guidage et remorquage, sont minimaux.

Pour ce qui concerne les hélicoptères embarqués à bord d'un navire porte-aéronefs, on sait que la phase critique pour la stabilité des aéronefs est le remorquage de ces derniers, car les aéronefs sont alors exposés aux vents de travers.

Afin d'augmenter la stabilité des hélicoptères embarqués et de les prendre en charge pour leur remorquage, dans de telles conditions d'utilisation, l'invention propose un mode de réalisation particulièrement avantageux de trains stabilisateurs auxiliaires additionnels, sur lequel chaque stabilisateur latéral est solidaire d'une partie d'extrémité de l'une respectivement de deux branches latérales d'un chariot stabilisateur et de remorquage, sur lequel les parties d'extrémité opposées des deux branches sont réunies au niveau d'un organe de manoeuvre.

Dans cette configuration, la jambe de chaque stabilisateur latéral est rigidement liée à la branche correspondante du chariot, et l'organe rigide et sensiblement transversal reliant cette jambe à la structure de l'hélicoptère est un bras latéral solidaire de la jambe et se montant tourillonnant autour d'un axe transversal sur au moins un élément de structure de la partie avant du fuselage, par l'intermédiaire d'un pivot à rotule autorisant des oscillations angulaires autour de cet axe transversal.

De préférence, les deux branches du chariot sont pivotantes l'une par rapport à l'autre, comme des branches de compas, autour d'un axe de pivot permettant l'encastrement latéral de chaque branche et du stabilisateur latéral correspondant sur la structure de l'hélicoptère, du côté correspondant du fuselage.

Afin d'améliorer la rigidité du chariot stabilisateur et de remorquage, notamment en vue du remorquage, les deux branches du chariot sont avantageusement réunies l'une à l'autre, sensiblement dans leur partie médiane, par au moins une traverse rigide articulée sur chacune d'elles, l'une au moins des deux articulations de chaque traverse comprenant un axe de pivot amovible, permettant le montage de la traverse correspondante entre les deux branches après la mise en place de ces dernières sur la structure du fuselage.

En outre, l'axe de pivot des deux branches l'une par rapport à l'autre est avantageusement l'axe d'un anneau constituant l'organe de manoeuvre et formé par la réunion des extrémités des deux branches du chariot, du côté opposé aux stabilisateurs latéraux.

Un tel chariot stabilisateur et de remorquage combine donc l'augmentation de stabilité de l'hélicoptère à la possibilité de tirer ce dernier longitudinalement et en virage, afin de permettre tous les déplacements nécessaires sur la plate-forme mouvante d'appontage et de celle-ci à un hangar. En cas de virage, l'effort latéral exercé sur l'anneau de remorquage introduit dans le fuselage de l'hélicoptère un moment de pivotement autour d'un axe vertical de sorte que la ou les roues de l'atterrisseur avant du train d'atterrissage tricycle, qui est ou sont du type tiré, ainsi que les roues du chariot de remorquage, également du type tiré, prennent une position d'équilibre pour accompagner le mouvement de pivotement du fuselage de l'hélicoptère.

Bien entendu, un tel chariot stabilisateur et de remorquage peut être également utilisé lorsque le train d'atterrissage tricycle comporte un atterrisseur auxiliaire arrière, constitué par une roulette tourillonnant autour d'un axe sensiblement vertical sous la poutre de queue de l'hélicoptère. Dans ce cas en effet, les stabilisateurs latéraux fixés aux extrémités des branches du chariot sont solidarisés sur la structure de l'hélicoptère en des points latéraux situés en arrière des atterrisseurs principaux et latéraux de l'hélicoptère. Ce dernier peut donc être remorqué par l'arrière.

L' invention a également pour objet un hélicoptère embarqué, à train d'atterrissage tricycle, comprenant deux atterrisseurs principaux et latéraux, et un atterrisseur auxiliaire avant ou arrière, équipé chacun d'au moins une roue ou roulette et qui se caractérise en ce qu'il comporte, de plus, un dispositif d'augmentation de la stabilité selon l'invention et tel que défini ci-dessus, et en ce que sa structure résistante présente, sur chacun des côtés de la partie inférieure du fuselage, et dans la direction tournée vers l'atterrisseur auxiliaire par rapport aux atterrisseurs principaux et latéraux, au moins un élément structural d'attache du support d'un stabilisateur latéral du train stabilisateur auxiliaire correspondant.

En particulier, lorsque le train d'atterrissage tricycle de l'hélicoptère embarqué comprend un atterrisseur auxiliaire avant, à au moins une roue tirée tourillonnant autour de l'axe de la jambe de cet atterrisseur auxiliaire avant, et lorsque l'hélicoptère est équipé d'un dispositif d'augmentation de la stabilité comprenant un chariot stabilisateur et de remorquage, ou est destiné à coopérer avec un tel dispositif, du type défini ci-dessus, le pivot à rotule interposé ou destiné à être interposé entre le bras latéral d'un stabilisateur et la structure de l'hélicoptère est retenu ou destiné à être retenu dans l'un de deux orifices coaxiaux et transversaux, ménagé chacun dans la nervure sensiblement longitudinale de l'une de deux ferrures structurales montées sur la structure de l'hélicoptère de sorte que l'axe transversal de pivotement des branches du chariot sur la structure de l'hélicoptère soit situé en avant de l'axe de tourillonnement de chacune des roues tirées de l'atterrisseur auxiliaire avant.

Par contre, lorsque l'hélicoptère embarqué selon l'invention, et du type dont le train d'atterrissage tricycle comprend un atterrisseur auxiliaire avant, est équipé ou destiné à être équipé d'un dispositif d'augmentation de stabilité comprenant deux stabilisateurs latéraux dont chacun se monte de manière amovible par brochage manuel sur la structure de l'hélicoptère, comme précisé ci-dessus, ladite structure résistante de l'hélicoptère supporte alors rigidement et, avantageusement, en saillie sous la partie inférieure du fuselage et en position fixe sensiblement à mi-distance entre l'atterrisseur auxiliaire avant et les atterrisseurs principaux et latéraux, deux parties au moins partiellement tubulaires de traverse rigide, constituant de préférence les deux parties d'extrémité latérales d'une même traverse, et dont chacune s'étend sensiblement horizontalement et partiellement en saillie latéralement à l'extérieur d'un côté respectivement de la partie inférieure du fuselage, par sa portion tubulaire qui s'ouvre latéralement vers l'extérieur et est percé de deux trous coaxiaux d'axe sensiblement longitudinal et perpendiculaire à son axe, afin de recevoir par emmanchement le bras latéral, présentant un passage d'axe également longitudinal, d'un stabilisateur retenu en position vis-à-vis de la structure de l'hélicoptère par une broche engagée dans lesdits trous et dans ledit passage, après mise en coïncidence de ces derniers.

Enfin, dans le cas où l'hélicoptère embarqué selon l'invention est équipé d'un train d'atterrissage tricycle comportant un atterrisseur auxiliaire avant, ainsi que d'un train stabilisateur auxiliaire à deux stabilisateurs latéraux escamotables et tels que définis ci-dessus, il est avantageux que le fuselage de l'hélicoptère porte, latéralement en porte-à-faux vers l'extérieur et de chaque côté de la partie inférieure du fuselage, entre l'atterrisseur auxiliaire avant et les atterrisseurs principaux et latéraux, un petit caisson caréné et allongé en direction longitudinale, qui délimite une trappe interne de logement au moins partiel de la jambe et de la ou des roues d'un stabilisateur latéral escamotable, la structure de l'hélicoptère présentant en outre au moins une première attache structurale de support de l'axe de pivot de la jambe correspondante, et, en arrière de ladite première attache structurale, au moins une seconde attache structurale de support et d'articulation d'un vérin de manoeuvre et de contreventement, également articulé par ailleurs sur ladite jambe.

L'invention sera mieux comprise et d'autres avantages et caractéristiques de l'invention apparaîtront à la lecture de la description donnée ci-dessous, à titre non limitatif, de plusieurs modes de réalisation préférés, décrits en référence aux dessins annexés sur lesquels :

La figure 1 est une vue en élévation latérale schématique d'un hélicoptère embarqué équipé d'un dispositif d'augmentation de stabilité à train stabilisateur auxiliaire comportant deux stabilisateurs latéraux escamotables,

La figure 2 est une vue en plan de l'hélicoptère de la figure 1,

La figure 3 est une vue partielle en élévation de face de l'hélicoptère des figures 1 et 2,

La figure 4 est une vue à plus grande échelle, schématique, en partie en coupe et en partie en élévation latérale, d'un stabilisateur latéral escamotable de l'hélicoptère des figures 1 à 3, et de son caisson caréné de rétraction.

La figure 5 est une vue schématique en plan, et au travers du caisson caréné, du stabilisateur latéral de la figure 4,

La figure 6 est une vue en élévation de face du stabilisateur escamotable des figures 4 et 5, qui est le stabilisateur escamotable de gauche de l'hélicoptère des figures 1 à 3,

La figure 7 est une vue schématique en élévation latérale partielle d'un second exemple d'hélicoptère embarqué, dont le train stabilisateur auxiliaire comprend deux stabilisateurs latéraux dont chacun est monté amovible individuellement et indépendamment de l'autre sur l'hélicoptère,

la figure 8 est une demi-vue schématique en plan de l'hélicoptère de la figure 1,

la figure 9 est une demi-vue schématique en élévation de face de l'hélicoptère des figures 7 et 8,

la figure 10 est une vue à plus grande échelle, en partie en coupe et en partie en élévation de face, du stabilisateur latéral de droite de l'hélicoptère des figures 7 à 9 ainsi que de la partie adjacente de l'hélicoptère sur laquelle il est monté amovible,

la figure 10a représente, à une autre échelle et en coupe axiale verticale, une variante du stabilisateur de la figure 10 équipée d'un mécanisme de réglage en hauteur de la roue de ce stabilisateur vis-à-vis du fuselage de l'hélicoptère,

la figure 11 est une vue schématique en élévation latérale d'un troisième exemple d'hélicoptère embarqué et équipé d'un chariot de stabilisation et de remorquage,

la figure 12 est une vue schématique en plan de l'hélicoptère et du chariot de la figure 11, et

la figure 13 est une vue schématique et partielle du mécanisme d'accrochage de l'une des deux branches du chariot des figures 11 et 12 sur la structure de l'hélicoptère de ces mêmes figures.

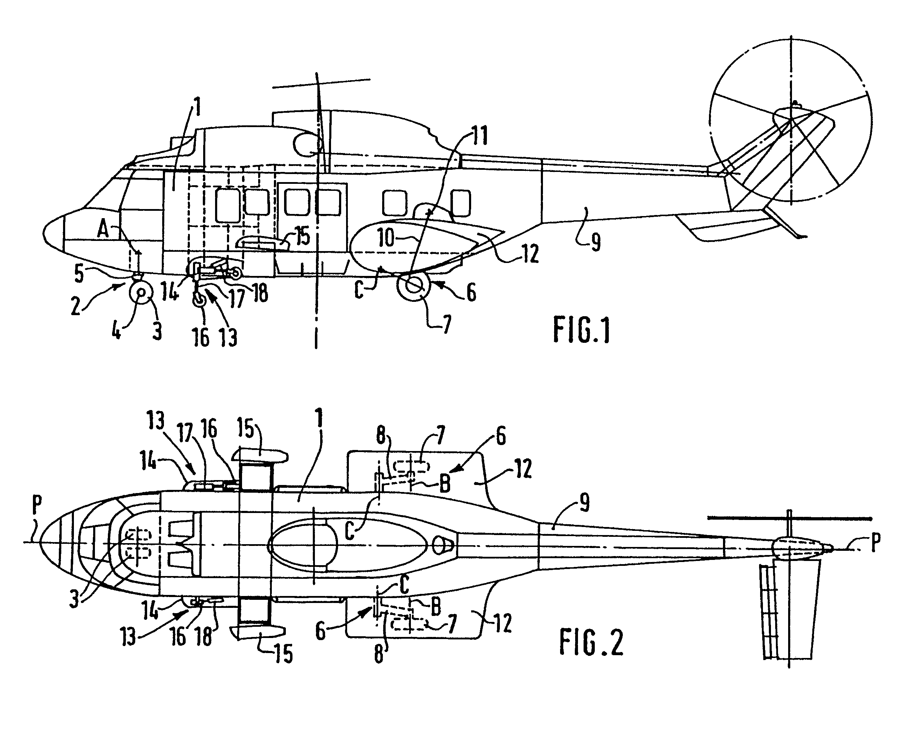

L'hélicoptère embarqué schématiquement représenté sur les figures 1 à 3 correspond à la version "navalisée" d'un hélicoptère biturbine de moyen tonnage, équipé d'un train d'atterrissage tricycle rétractable, comportant un atterrisseur auxiliaire avant et deux atterrisseurs principaux et latéraux, et étudié et réalisé pour une mise en oeuvre terrestre. Sur cet hélicoptère, dont le fuselage dans son ensemble est indiqué en 1, l'atterrisseur auxiliaire avant 2 est du type comportant deux roues 3 jumelées ou montées côte-à-côte en rotation autour de leur axe commun sur une fusée double et transversale 4, solidaire de l'extrémité inférieure d'une tige d'amortisseur montée axialement coulissante dans un cylindre d'amortisseur intégré dans le fût tubulaire d'une jambe d'atterrisseur avant 5. Cette jambe 5 est montée pivotante autour de l'axe transversal A sur la partie inférieure de la structure résistante de l'hélicoptère, et peut être déplacée, en direction longitudinale et par un vérin de manoeuvre, entre deux positions extrêmes, dans chacune desquelles elle est verrouillée, et dont l'une est une position "train sorti" (représentée sur les figures 1 à 3), dans laquelle la jambe 5 est verrouillée en position sensiblement verticale et les roues 3 descendues par rapport au fuselage 1, et dont l'autre position est une position "train rentré", dans laquelle la jambe 5 et les roues 3 sont relevées dans une trappe ménagée dans une soute ventrale de l'hélicoptère. Comme représenté sur la figure 1, les roues 3 sont montées en roues tirées, dont l'axe de la double fusée 4 est décalé en arrière de l'axe sensiblement vertical de la jambe 5 en position sortie, et l'équipage mobile constitué par les deux roues 3 et la double fusée 4 est monté tourillonnant autour de l'axe du fût tubulaire de la jambe 5, et sa position angulaire autour de cet axe peut être commandée par une commande de direction, manoeuvrée par le pilote, s'il s'agit d'un atterrisseur avant orientable. De plus, cet atterrisseur avant 2 est équipé d'une installation de freinage (non représentée) des roues 3. Bien entendu, en position normale de ces dernières, pour la manoeuvre de l'atterrisseur avant comme pour le roulage vers l'avant, l'axe commun de ces roues 3 est transversal, c'est-à-dire perpendiculaire au plan longitudinal et médian PP de l'hélicoptère, et les deux roues 3 sont symétriques l'une de l'autre par rapport à ce plan et à faible distance de ce dernier, de sorte que les deux roues 3 occupent une position centrale sous la pointe avant du fuselage, c'est-à-dire en dessous du plancher du poste d'équipage.

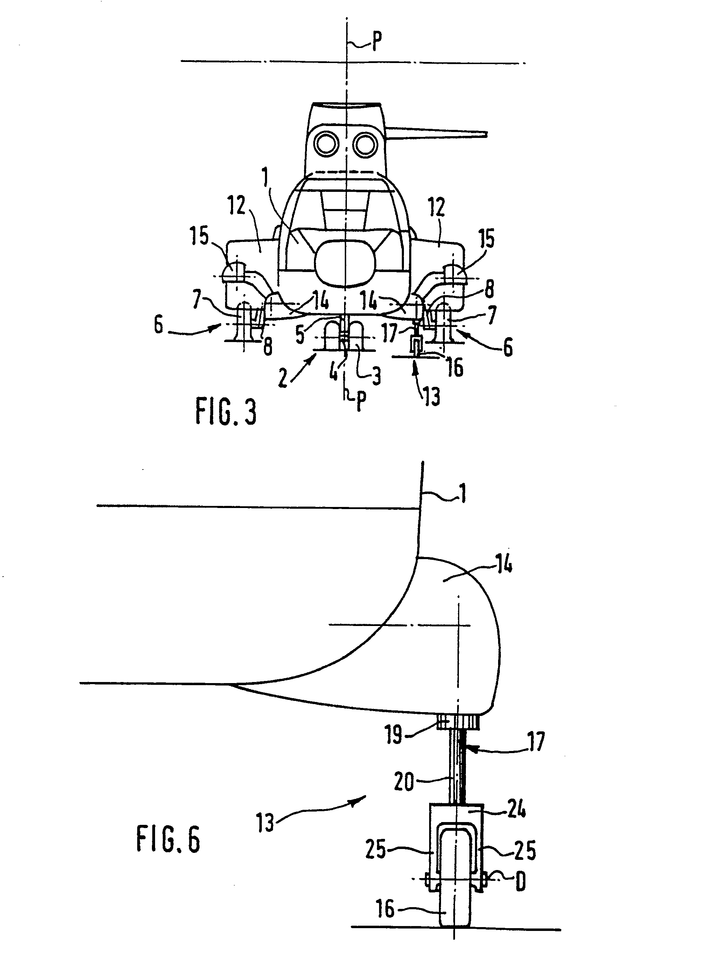

Chacun des deux atterrisseurs principaux et latéraux 6 est un atterrisseur à balancier à une seule roue tirée 7 montée en rotation latéralement à l'extérieur du balancier 8 sur une fusée d'axe transversal B, à l'extrémité inférieure et arrière du balancier sensiblement longitudinal 8, qui est incliné d'avant en arrière et de haut en bas, et légèrement de l'intérieur vers l'extérieur par rapport au plan PP, et qui est monté pivotant par son extrémité avant, autour d'un axe transversal C, sur la partie inférieure et arrière de la structure résistante de l'hélicoptère, dans la partie arrière du fuselage 1, juste en avant de sa zone de raccordement à la poutre de queue 9 de l'hélicoptère. Les oscillations et débattements du balancier 7 autour de son axe C, à l'appontage, au décollage et au roulage, sont amortis par un amortisseur-vérin (de tout type convenable connu) représenté schématiquement par le segment 10, et qui est articulé par son extrémité inférieure sur le balancier 8, entre les axes B et C, et par son extrémité supérieure sur un point fixe 11 de la structure de l'hélicoptère, en arrière de l'axe B et au-dessus de l'axe C, cet amortisseur-vérin 10 commandant également, par pivotement du balancier 8 autour de son axe C, les passages de l'atterrisseur principal 6 correspondant de la position "train sorti" représentée sur les figures 1 et 3, et dans laquelle la roue 7 est descendue en saillie sous le fuselage 1, à la position "train rentré" dans laquelle la roue 7 est relevée à l'intérieur d'un caisson latéral profilé 12, en porte-à-faux sur la partie latérale arrière du fuselage 1, du côté correspondant. En outre, chaque roue 7 est équipée d'un frein.

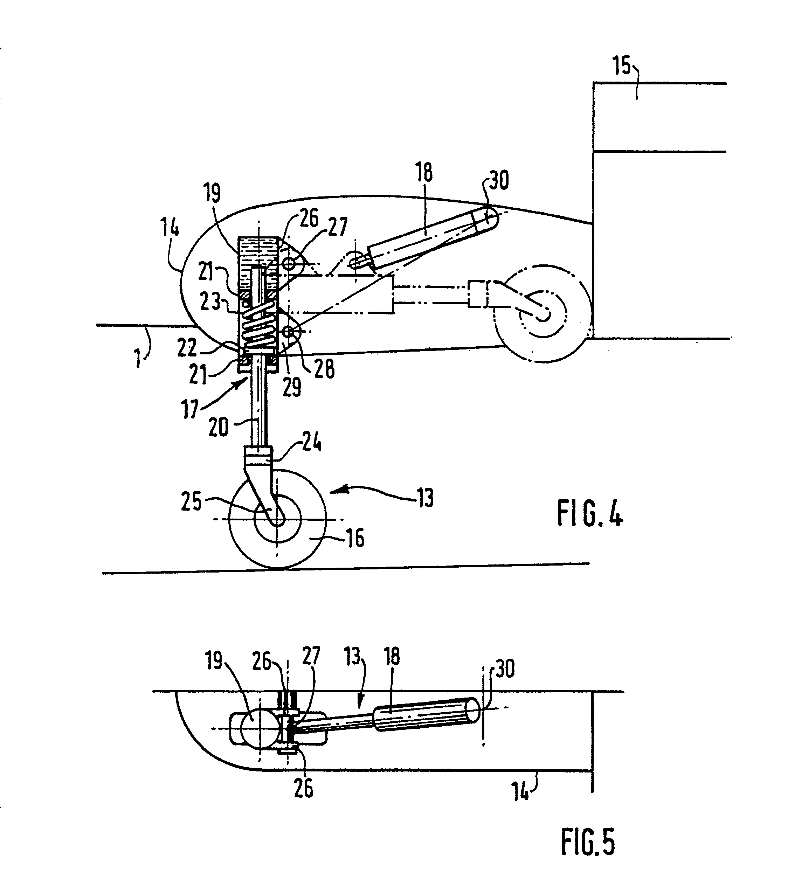

Cet hélicoptère est en outre équipé d'un train stabilisateur auxiliaire plus précisément décrit ci-dessous en faisant également référence aux figures 4 à 6.

Ce train stabilisateur auxiliaire comporte deux stabilisateurs latéraux 13, qui, comme les atterrisseurs principaux 6, sont montés symétriquement l'un de l'autre de part et d'autre du plan PP longitudinal vertical et médian de l'hélicoptère, et implantés chacun en saillie latéralement vers l'extérieur sur l'un des côtés de la partie inférieure du fuselage 1, dans l'un de deux petits caissons profilés 14, de dimensions très inférieures à celles des caissons arrières 12, et qui sont montés latéralement en porte-à-faux sur la partie inférieure du fuselage 1 et de part et d'autre de celui-ci, dans une position longitudinale située entre les atterrisseurs principaux 6 et l'atterrisseur auxiliaire avant 2, et, plus précisément, entre ce dernier et des pylones latéraux 15 d'emport d'armement, eux-mêmes latéralement en saillie sur les côtés du fuselage 1 sensiblement à mi-distance entre l'atterrisseur auxiliaire 2 et les atterriseurs principaux 6.

Chaque stabilisateur latéral 13 est monté escamotable dans le petit caisson 14 correspondant, et comprend essentiellement une seule roue 16 montée en roue tirée à une extrémité d'une jambe 17 qui est elle-même montée pivotante par sa partie d'extrémité opposée sur la structure de l'hélicoptère, autour d'un axe transversal, de façon à pouvoir être déplacée dans une direction générale longitudinale, entre deux positions extrêmes dans lesquelles elle est verrouillée, et dont l'une est une position "stabilisateur sorti", représentée pour le stabilisateur latéral 13 de gauche de l'hélicoptère sur les figures 1 à 3, et dans laquelle la jambe 17 du stabilisateur est verticale pour que la roue 16, à son extrémité inférieure, soit descendue sous le fuselage 1 et puisse prendre appui sur la plate-forme mouvante d'appontage, et dont l'autre position est une position "stabilisateur rentré" représentée pour le stabilisateur latéral 13 de droite sur les figures 1 à 3, et dans laquelle la jambe 17 a été relevée sensiblement à l'horizontale et vers l'arrière, par pivotement autour de son axe transversal de liaison à la structure de l'hélicoptère, à l'aide d'un actionneur de manoeuvre 18 également logé dans le caisson 14 correspondant, et de sorte que toute la jambe 17 et la plus grande partie de la roue 16 soient escamotées et logées à l'intérieur du caisson 14, le passage en position "stabilisateur rentré" étant commandé par le pilote avant décollage, et cette position étant conservée pendant le vol, pour que la trainée aérodynamique soit minimale, tandis que le passage en position "stabilisateur sorti" est commandé juste après l'appontage, et cette position est conservée tant que l'hélicoptère reste posé sur la plate-forme mouvante, pour assurer, rotor arrêté, l'augmentation recherchée de stabilité, en particulier transversale, jusqu'à un angle critique d'environ 30°.

Ainsi, chacune des deux roues 16, stabilisatrices et latérales, est rattachée à demeure à la structure de l'hélicoptère, par un support essentiellement rigide comprenant la jambe 17 et un organe rigide et transversal de liaison de cette jambe 17 à la structure, cet organe étant, dans cet exemple, le pivot transversal de la jambe 17.

Plus précisément, et comme représenté sur les figures 4 à 6, la jambe 17 comprend un fût tubulaire 19, de forme générale cylindrique, et une tige 20 qui est partiellement engagée et retenue axialement dans le fût 19, de façon à pouvoir à la fois tourillonner librement dans ce dernier et autour de son axe, et coulisser axialement, sur une course limitée, dans le fût 19, en étant rappelée élastiquement vers sa position d'extension maximum vers l'extérieur du fût 19.

A cet effet, on a schématiquement représenté sur la figure 4 deux paliers 21 coaxiaux et internes au fût 19, qui guident la partie de tige 20 engagée dans le fût 19 en rotation sur elle-même autour de son axe et en translation axiale dans le fût 19, cette partie interne de tige 20 ainsi guidée présentant une butée annulaire 22 en saillie radiale entre les deux paliers 21 et qui est repoussée vers le palier 21 le plus proche de l'extrémité du fût 19 traversée par la tige 20, par un ressort hélicoïdal 23 de très grande raideur, qui entoure sans contact la tige 20 et prend appui par son autre extrémité sur l'autre palier 21.

A l'extrémité libre de sa partie externe au fût 19, la tige 20 est solidaire d'une chape 24 porte-roue dont les deux branches parallèles 25 sont inclinées d'un même côté de l'axe de la tige 20, et entre lesquelles la roue 16 est montée en roue tirée tournant autour d'un axe D horizontal et perpendiculaire à l'axe de la tige 20, et décalé d'un côté de cette tige 20 en raison de l'inclinaison des branches 25.

Ainsi, l'équipage mobile constitué par la roue 16, la chape 24 et la tige 20 peut librement tourner autour de l'axe de la tige 20 et du fût 19 de la jambe 17.

La partie d'extrémité du fût 19 du côté opposé à la roue 16 présente vers l'arrière deux oreilles parallèles et rigides 26 tourillonnant autour d'un arbre de pivot 27 horizontal et transversal, rigidement lié à la partie latérale inférieure et du côté correspondant de la structure résistante de l'hélicoptère, de sorte que la jambe 17 dans son ensemble et avec la roue 16 puisse pivoter autour de l'axe transversal de ce pivot 27.

L'actionneur 18 qui commande les pivotements de la jambe 17 est un vérin hydraulique ou électrique, de manoeuvre et de contreventement, de tout type convenable connu, qui est articulé à l'extrémité libre de sa tige de vérin et par un pivot transversal 28 entre deux oreilles d'attache parallèles et rigides 29, portées vers l'arrière par la partie d'extrémité du fût 19 du côté de la roue 16, tandis que le vérin 18 est articulé par l'extrémité fermée de son cylindre et sur la structure de l'hélicoptère en un point fixe 30 situé dans le caisson 14, en arrière et au-dessus du pivot 27.

Le relevage de la jambe 17 et de la roue 16 correspondante de la position sortie à la position rentrée et escamotée dans le caisson 14 est ainsi assuré longitudinalement et vers l'arrière par la rentrée de la tige de vérin dans le cylindre du vérin 18, et la descente de la jambe 17 est commandée par la sortie de la tige du vérin 18 hors de son cylindre, le vérin 18 étant à verrouillage hydraulique ou mécanique en fin de course et à déverrouillage hydraulique, s'il s'agit d'un vérin hydraulique alimenté à partir d'un circuit hydraulique de l'hélicoptère, tandis que ce vérin 18 est un vérin à verrouillage électrique ou mécanique et à déverrouillage électrique s'il s'agit d'un vérin électrique, alimenté à partir d'un circuit électrique de l'appareil, afin que ce vérin 18 assurant la manoeuvre du stabilisateur 13 puisse simultanément faire fonction de contrefiche de contreventement de la jambe 17, en particulier en position "stabilisateur sorti".

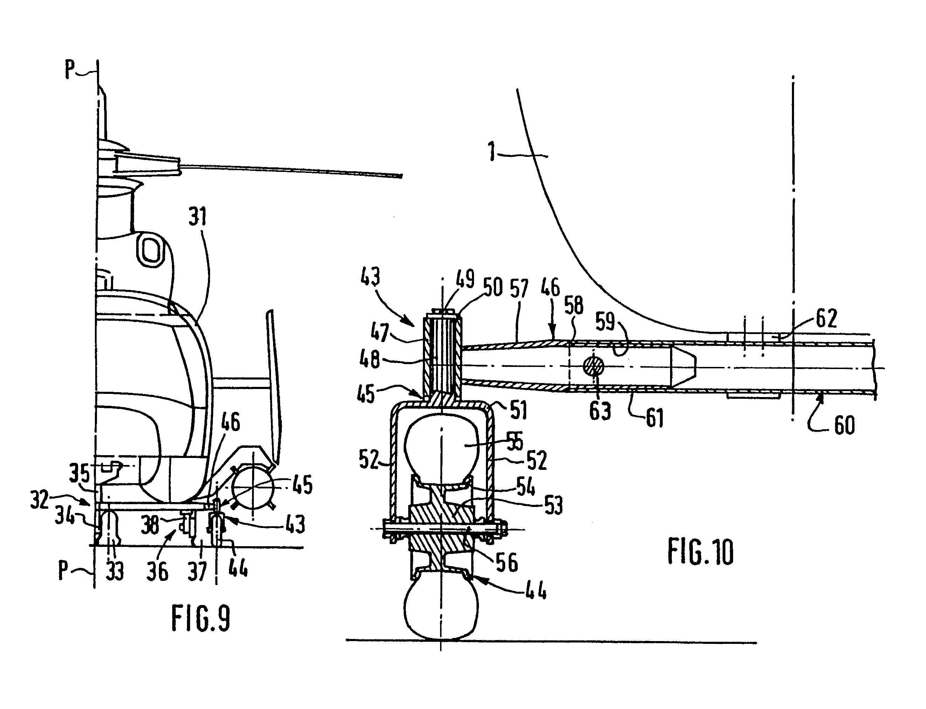

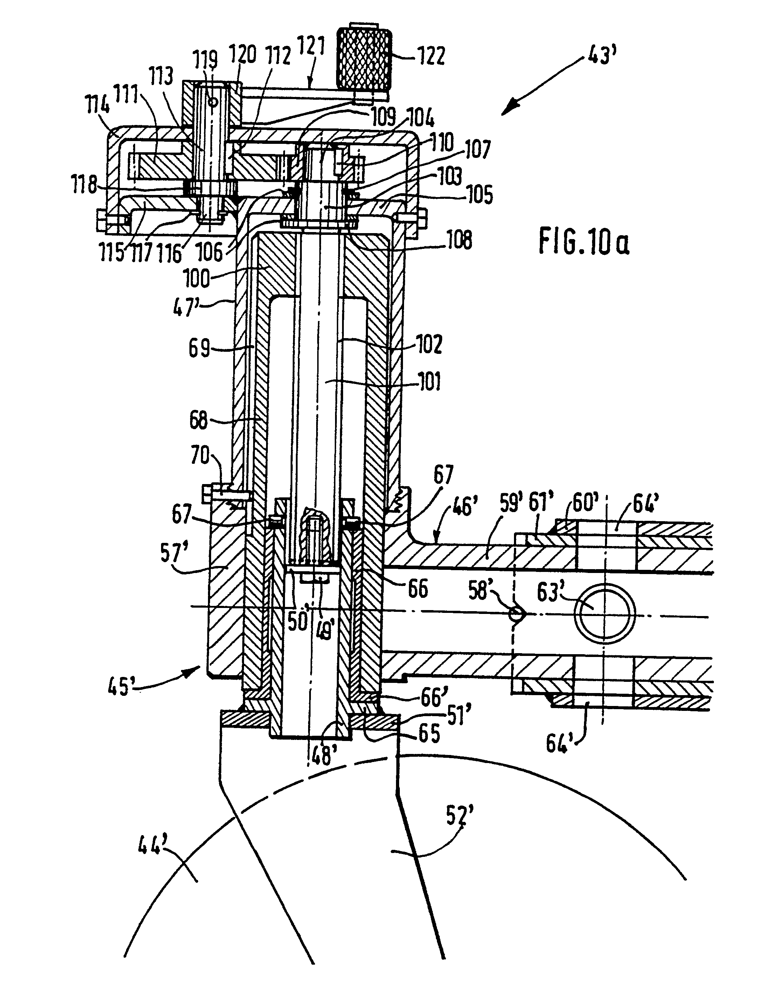

De plus, pour tenir compte des variations de la charge de l'hélicoptère, le fût 19 renferme également un mécanisme de réglage de la position axiale de la tige 20 dans le fût 19, afin de régler la hauteur de la roue 16 vis-à-vis du fuselage 1. De tels mécanismes de réglage en hauteur de la roue sont décrits ci-dessous en référence aux figures 4 et 10a.

Sur la figure 4, on a schématiquement représenté un tel mécanisme fonctionnant par vérin hydraulique. Ce vérin est constitué par la partie supérieure du fût tubulaire 19 formant le cylindre rempli d'un volume commandé de fluide hydraulique et le palier supérieur 21 formant le piston. Ce dispositif permet, sur commande du pilote et par un déplacement d'ensemble des 2 paliers 21 d'assurer un réglage de la position de la tige 20 et par conséquent de la roue 16, en hauteur vis-à-vis du fuselage 1.

Sur l'hélicoptère représenté sur les figures 1 à 3 et équipé d'un train stabilisateur auxiliaire à deux stabilisateurs latéraux relevables, tels que décrit ci-dessus en référence également aux figures 4 à 6, le polygone de sustentation n'est plus délimité par un triangle dont les sommets correspondent aux points d'appui de chacune des roues 7 des atterrisseurs principaux 6 et des deux roues 3 de l'atterrisseur auxiliaire avant 2, (considérées comme procurant un unique point d'appui), mais grâce à la présence des deux stabilisateurs latéraux 13, le polygone de sustentation est considérablement élargi et délimité par le trapèze dont les sommets correspondent aux points de contact avec la plate-forme mouvante des roues 7 des deux atterrisseurs principaux 6 et des roues 16 des deux stabilisateurs latéraux 13. Cet agrandissement du polygone de sustentation apparaît clairement à la considération de la vue en plan de la figure 2.

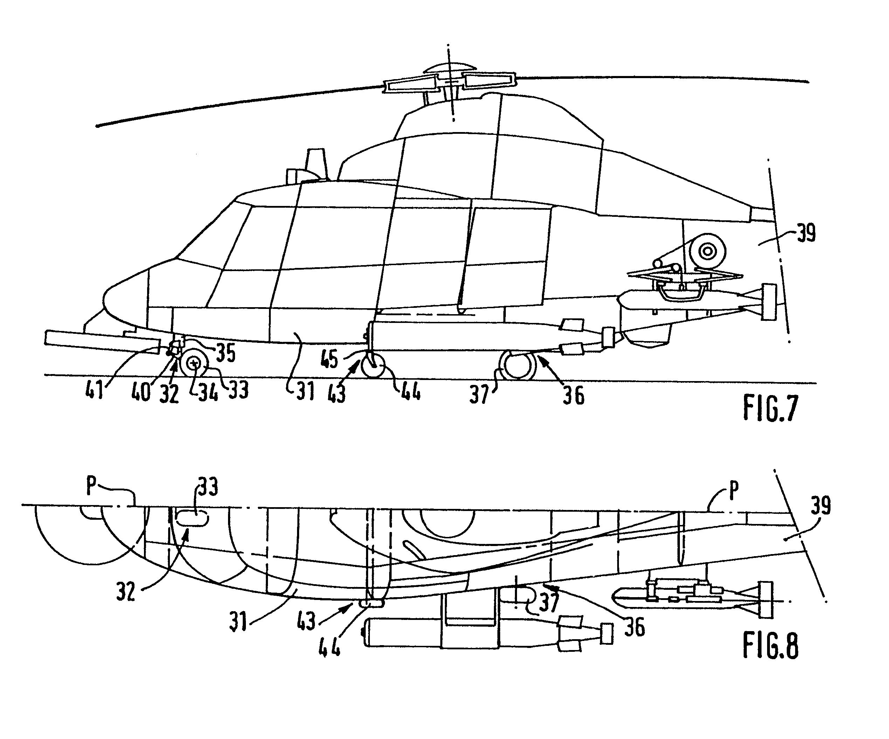

Le second exemple d'hélicoptère embarqué, représenté sur les figures 7 à 9, correspond également à une version navalisée d'un hélicoptère biturbine, dont le fuselage est indiqué en 31, et qui est équipé d'un train d'atterrissage tricyle rétractable, comportant un atterrisseur auxiliaire avant 32 et deux atterrisseurs principaux et latéraux 36, et ayant été étudié et réalisé pour une mise en oeuvre terrestre de l'hélicoptère. Comme dans le premier exemple, chaque atterrisseur principal et latéral 36 comprend une seule roue 37, équipée d'un frein, et tournant autour de son axe, qui est transversal, sur une fusée en saillie latérale vers l'extérieur par rapport au plan longitudinal vertical et médian PP de l'hélicoptère, sur l'extrémité inférieure d'une jambe 38 d'atterrisseur qui est articulée sur la partie inférieure et latérale du côté correspondant de la structure résistante de l'hélicoptère, et relevable par un vérin de manoeuvre dans une soute ventrale arrière et latérale du fuselage 31. Par rapport aux atterrisseurs principaux du premier exemple, la seule différence essentielle est que, dans ce second exemple, chaque atterrisseur principal 36 est du type à coulissement direct, et non à balancier.

Comme dans le premier exemple, l'atterrisseur auxiliaire avant 32 comprend deux roues 33 jumelées, montées en rotation autour de leur axe commun sur une fusée double et transversale 34, reliée à l'extrémité inférieure d'une tige d'amortisseur montée axialement coulissante dans un cylindre d'amortisseur intégré dans le fût tubulaire d'une jambe d'atterrisseur avant 35, laquelle est montée pivotante sur la partie inférieure avant et centrale de la structure résistante de l'hélicoptère, autour d'un axe horizontal et transversal (perpendiculaire au plan PP), et est manoeuvrée entre la position "train sorti", représentée sur les figures 7 à 9, et la position "train rentré" dans laquelle l'atterrisseur avant 32 est relevé dans une soute centrale, ventrale et avant du fuselage 31, par un vérin de manoeuvre et éventuellement de contreventement (non représenté). Comme dans le premier exemple, les roues 33 sont également montées en roues tirées, l'axe de leur double-fusée 34 étant décalé en arrière de l'axe sensiblement vertical de la jambe 35 en position sortie ; cependant, contrairement au premier exemple, cet atterrisseur auxiliaire avant 32 n'est pas du type à coulissement direct, mais du type à balancier, la double-fusée 34 étant solidaire de l'extrémité arrière d'un balancier 40, incliné d'avant en arrière et de haut en bas en position atterrisseur sorti, et articulé dans sa partie centrale autour d'un axe transversal sur l'extrémité inférieure de la tige d'amortisseur de la jambe 35, tandis que son extrémité avant est également articulée autour d'un axe transversal sur l'extrémité d'une biellette 41 formant compas de direction avec le balancier 40, et dont l'autre extrémité est articulée sur un organe annulaire de la jambe d'atterrisseur 35 qui tourne autour de l'axe du fût tubulaire de cette jambe 35, et qui peut être un organe de commande de direction, si l'atterrisseur avant 32 est orientable.

Sur un tel atterrisseur avant rétractable, de structure bien connue, l'équipage mobile constitué par les roues 33, la double-fusée 34, le balancier 40, la biellette 41 et la tige d'amortisseur est monté tourillonnant autour de l'axe du fût tubulaire de la jambe 35, et sa position angulaire peut être commandée par le pilote, par la manoeuvre de la commande de direction, si cet atterrisseur est orientable. De plus, l'atterrisseur avant 32 est également équipé d'une installation de freinage (non représentée) des roues 33.

Comme dans le premier exemple, l'atterrisseur avant 32 occupe une position centrale sous la pointe avant du fuselage 31, ses deux roues 33 étant, en position normale, symétriques l'une de l'autre par rapport au plan PP et à proximité immédiate de ce plan, et les deux atterrisseurs principaux 36 sont symétriques l'un de l'autre par rapport au plan PP mais à l'arrière du fuselage 31, jusque avant la zone de raccordement de ce dernier à la poutre de queue 39 de l'hélicoptère, et dans des positions latéralement très écartées du plan PP, de sorte que chaque roue 37 soit juste en saillie latéralement et en dessous de la partie inférieure latérale du fuselage 31, du côté correspondant, en position "train sorti".

Pour augmenter la stabilité de cet hélicoptère, lorsqu'il est posé sur une plate-forme mouvante, il est équipé, immédiatement après son appontage et jusqu'aux instants qui précèdent immédiatement le décollage suivant, d'un train stabilisateur auxiliaire et additionnel, qui comprend deux stabilisateurs latéraux 43, dont chacun se monte de manière amovible sur l'hélicoptère par un mécanisme à broche d'accouplement et désaccouplement manuel, qui peut être facilement et rapidement mise en place et retirée. Ces deux stabilisateurs 43 se montent symétriquement l'un de l'autre, de part et d'autre du plan PP, et de sorte que chacun d'eux soit en saillie latéralement vers l'extérieur et vers le bas sur l'un des côtés de la partie inférieure du fuselage 1, sensiblement à mi-distance, en direction longitudinale, entre l'atterrisseur avant 32 et les atterrisseurs principaux 36.

Ces stabilisateurs 43, peuvent être adjoints à l'hélicoptère après l'appontage de ce dernier et démontés manuellement juste avant son décollage. Ils peuvent également rester à poste sur l'appareil pour le vol, après pivotement manuel d'un quart de tour sur leur axe de fixation et brochage, dans cette position, ceci étant fait juste avant le décollage. Ce mode d'utilisation est avantageux lorsque l'hélicoptère doit intervenir dans une mission de sauvetage ou de sauvegarde à partir d'un porte-avions, au cours d'opérations de catapultage d'avions. Dans cette mission, l'hélicoptère effectue des vols courts, à faible distance du porte-avions, et le poids des stabilisateurs et la trainée qu'ils induisent n'ont qu'une importance secondaire par rapport au délai de mise en vol de l'hélicoptère, qui est prioritaire.

Chacun des stabilisateurs 43 comprend essentiellement une roue stabilisatrice 44, montée en roue tirée à l'extrémité inférieure d'une courte jambe verticale 45, qui est solidaire d'un bras latéral 46 par lequel le stabilisateur 43 est fixé de manière amovible sur la structure de l'hélicoptère.

Ainsi, chacune des deux roues stabilisatrices et latérales 44 est, en position d'utilisation des stabilisateurs 43, rattachée à la structure de l'hélicoptère par un support essentiellement rigide constitué de la jambe 45 et de son bras 46 faisant fonction d'organe rigide et transversal de liaison de cette jambe à la structure.

Plus précisément, et comme représenté sur la figure 10, la jambe 45 comprend un fût tubulaire 47, ayant la forme générale d'un tronc de cylindre de section circulaire, et une tige cylindrique 48 engagée axialement dans l'alésage central du fût 47, dans lequel elle peut librement tourillonner autour de son axe, et dans lequel elle est retenue par une vis 49 traversant une rondelle 50 en butée contre la face externe de l'extrémité supérieure du fût 47 et vissée dans la partie d'extrémité supérieure de la tige 48, et l'extrémité inférieure de la tige 48, qui dépasse sous le fût 47, est solidaire d'une chape 51 dont les deux branches parallèles 52 sont inclinées d'un même côté de l'axe de la tige 48. Entre ces deux branches 52, la roue 44 est montée en roue tirée par son moyeu 53, muni d'une jante 54 entourée d'un pneumatique 55, et qui est monté tournant autour d'un pivot 56 fixé entre les extrémités des deux branches 52 de la chape 51, de sorte que l'axe de ce pivot 56 soit ainsi décalé d'un côté de l'axe du fût 47 et de la tige 48. L'équipage mobile constitué de la roue 44, de la chape 51 et de la tige 48 est donc ainsi librement tourillonnant autour de l'axe du fût 47 et de la tige 48.

Le bras latéral 46 du stabilisateur 43 est un bras tubulaire d'axe perpendiculaire à l'axe du fût 47, et ce bras est solidaire de la partie centrale du fût 47 par une partie 57 directement adjacente au fût 47 et de forme sensiblement tronconique, convergeant vers ce fût. Cette partie de bras 57 est séparée par un épaulement radial et périphérique 58 d'une partie d'extrémité 59 de plus petit diamètre externe et à paroi plus mince, par laquelle le bras 46 est emmanché dans une portion d'extrémité latérale 61, ouverte latéralement vers l'extérieur, par rapport au plan PP, d'une traverse tubulaire 60 fixe et rigide, montée en saillie sous la partie inférieure du fuselage 1, et solidarisée par des ferrures structurales, dont une seulement est représentée en 62, à la partie inférieure de la structure résistante de l'hélicoptère, par exemple au niveau d'un cadre de fuselage.

Lorsque la partie amincie 59 du bras 46 est emmanchée au maximum dans la portion 61 de la traverse 60, d'axe horizontal et transversal, et donc lorsque l'épaulement 58 vient en butée contre l'extrémité latérale externe de la portion de traverse 61, qui apparaît ainsi en saillie latéralement sous la partie inférieure du côté correspondant du fuselage, deux trous coaxiaux et de même diamètre, d'axe horizontal et parallèle au plan PP de l'hélicoptère, qui ont été percés dans la portion 61 de la traverse, viennent en coïncidence avec deux trous du même diamètre et coaxiaux, d'axe horizontal, percés dans la partie amincie 59 du bras 46, perpendiculairement à l'axe de ce dernier, de sorte que l'introduction d'une broche 63 dans ces trous en coïncidence et au travers du bras 46 et de la portion 61 de traverse 60, permet de fixer rapidement et facilement le bras 46, et donc l'ensemble du stabilisateur latéral 43, à la traverse 60 de l'hélicoptère. La fixation de chaque stabilisateur latéral 43 sur le côté correspondant de l'hélicoptère par brochage manuel peut donc être effectuée très rapidement et facilement, dès après l'appontage, et, de même l'enlèvement des stabilisateurs 43 par débrochage manuel peut être assuré très rapidement juste avant le décollage, par des personnels d'assistance sur la plate-forme mouvante.

Dans le cas où on souhaite conserver les stabilisateurs 43 sur l'hélicoptère pour le vol, il convient, juste avant le décollage, après avoir retiré la broche 63, de faire pivoter manuellement chaque stabilisateur 43 autour de l'axe de la traverse 60, d'un quart de tour vers l'arrière, et de repositionner chaque broche 63 dans les trous existant au travers du bras 46 et dans deux autres trous (en regard) d'axe vertical ménagés en correspondance dans la portion 61 de la traverse 60. Après l'appontage, on exécute les manoeuvres inverses pour remettre les stabilisateurs 43 en position active.

Afin d'ajuster la hauteur du stabilisateur 43 à la charge de l'hélicoptère, qui est variable, et donc afin d'ajuster la hauteur de la roue 44 vis-à-vis du fuselage 1, les moyens assurant la retenue mécanique de la tige 48 dans le fût 47 peuvent être combinés à un mécanisme de réglage de la position axiale de cette tige 48 dans le fût 47, ou agencés eux-mêmes en un tel mécanisme. Par exemple, le dévissage partiel de la vis 49 permet de descendre la tige 48 dans le fût 47, si la rondelle 50 est solidaire de ce fût 47, et donc d'allonger la jambe 45 en abaissant la roue 44.

De préférence cependant, ce mécanisme de réglage en hauteur est un mécanisme à roue dentée et vis sans fin tel que décrit ci-dessous en référence à la figure 10a, qui représente, en coupe axiale et verticale, le meilleur mode de réalisation, connu de la demanderesse à ce jour, d'un stabilisateur additionnel selon ce second exemple.

Sur la figure 10a, la chape 51', dont les deux branches 52' supportent la roue stabilisatrice 44' montée en roue tirée, est soudée à l'extrémité inférieure d'une fusée cylindrique tubulaire 48' et à une bride radiale externe 65 présentée par cette fusée 48' à proximité de son extrémité inférieure. Cette fusée 48' est engagée et retenue axialement dans une douille épaulée en bronze 66, qui est emmanchée serrée dans la partie d'extrémité inférieure d'un coulisseau cylindrique tubulaire 68, de sorte que la fusée 48' puisse tourillonner dans la douille 66 et dans le coulisseau 68, autour de leur axe commun, la retenue axiale de la fusée 48' dans la douille 66 étant assurée par des pions d'arrêt 67, qui sont partiellement logés dans des perçages radiaux ménagés dans la fusée tubulaire 48' et font saillie radialement vers l'extérieur de manière à venir en butée contre l'extrémité supérieure de la douille épaulée 66. L'épaulement 66' de la douille 66, en saillie radiale vers l'extérieur à l'extrémité inférieure de cette douille 66, est en butée contre l'extrémité inférieure du coulisseau 68, qui est monté coulissant axialement dans la jambe de stabilisateur 45', essentiellement constituée du fût tubulaire cylindrique 47', vissé par son extrémité inférieure dans la partie supérieure d'une portion latérale externe 57', de forme générale cylindrique, du bras latéral 46' du stabilisateur 43'. Cette portion latérale externe 57' du bras 46' est percée d'un alésage coaxial à l'alésage interne du fût tubulaire 47' et dans lequel le coulisseau 68 est monté à coulissement axial doux et guidé en translation, sans possibilité de rotation dans le fût 47' et dans la portion externe 57' du bras latéral 46', par la coopération d'une rainure longitudinale 69, ménagée dans la paroi latérale externe du coulisseau 68, et d'une vis à téton 70, vissée au travers des parties du fût 47' et de la portion de bras 57' qui sont elles-mêmes vissées l'une dans l'autre, et dont l'extrémité de la tige de vis 70 débouche dans la rainure 69.

La partie supérieure 100 du coulisseau 68 est percée d'un contre-alésage axial de plus petit diamètre que l'alésage principal dans lequel sont engagées la douille 66 et la fusée 48', et ce contre-alésage est taraudé avec un filetage complémentaire à celui d'une vis sans fin 101 avec laquelle il est en prise. La vis sans fin 101, dont le filetage 102 est par exemple constitué de deux filets carrés, s'étend axialement à l'intérieur du coulisseau 68 et son extrémité inférieure, qui peut pénétrer librement à l'intérieur de la fusée tubulaire 48', porte une rondelle 50' maintenue par une vis axiale 49' et faisant office de butée de fin de course de la vis 101, limitant la sortie du coulisseau 68 vers l'extérieur du fût 47' et de la portion de bras 57' lorsque la vis 101 est tournée sur elle-même, jusqu'à la venue de la rondelle 50' en butée contre la partie supérieure 100 du coulisseau 68.

La partie supérieure de la vis sans fin 101 n'est pas filetée mais aménagée en deux portions d'arbre cylindriques et coaxiales 103 et 104, décalées axialement et raccordées par un épaulement. Par la portion d'arbre 103, de diamètre supérieur à celui de la portion d'arbre 104, la vis sans fin 101 est montée tourillonnante autour de son axe dans un palier formé par le fond 105 de l'extrémité supérieure du fût 47' qui est percé d'un passage axial logeant la portion d'arbre 103, et par deux bagues de bronze 106 qui entourent la portion d'arbre 103 et sont axialement calées l'une en position supérieure, entre la face supérieure du fond 105 et un circlip 107 encliqueté dans une gorge périphérique de la portion d'arbre 103, et l'autre, en position inférieure, entre la face inférieure du fond 105 et un épaulement radial 108 qui, sur la vis sans fin 101, sépare la partie filetée 102 des portions d'arbre 103 et 104. Un pignon 109 à denture droite est monté et lié en rotation par une clavette 110 sur la portion d'arbre 104, et ce pignon 109, est en prise avec une roue dentée 111, elle-même solidaire en rotation, par la clavette 112, d'un arbre 113, d'axe parallèle à l'axe de la vis 101, et monté en rotation autour de son axe dans un boîtier auxiliaire 114 vissé, d'une part, sur le fût 47' et, d'autre part, sur un fond auxiliaire 115 qui est soudé au fond supérieur 105 du fût 47' et latéralement dans le prolongement de ce fond 105, et qui ferme le boîtier 114 dans lequel sont aussi logés et protégés le pignon 109, la roue dentée 110 et les portions d'arbre 103 et 104 de la vis 101. L'arbre 113 présente une partie inférieure de plus petit diamètre 116 qui traverse le fond auxiliaire 115 formant palier et est retenue en position par un circlip 117 encliqueté dans une gorge de cette partie 116 juste sous la face inférieure du fond 115, contre lequel l'arbre 113 repose par un épaulement 118. La roue dentée 111 a aussi son moyeu monté entre l'épaulement 118, contre lequel elle repose, et le boîtier 114, de même que le pignon 109 a son moyeu monté entre l'épaulement de raccordement des portions d'arbre 103 et 104, contre lequel il repose, et le boîtier 114. Enfin, la partie supérieure de l'arbre 113 traverse le boîtier 114, formant palier, et fait saillie au-dessus de ce boîtier 114 où elle est retenue par une goupille transversale 119 dans le moyeu 120 d'une manivelle 121 nervurée et à poignée de commande 122.

Ainsi, par la rotation manuelle de la manivelle 121, on commande la rotation de l'arbre 113 et de la roue dentée 111 autour de leur axe commun. Cette rotation est transmise au pignon 109 et à la vis sans fin 101, qui tournent autour de leur axe commun. Cette rotation de la vis sans fin 101, fixe en position axiale dans le fût 47', entraîne le déplacement axial en translation du coulisseau 68 vis-à-vis du fût 47' et du bras 46'. Il en résulte un déplacement axial, avec le coulisseau 68, de la roue 44' de la chape 51' et de la fusée 48', qui forment un équipage mobile monté tourillonnant dans la douille épaulée 66 encastrée dans le coulisseau 68. On peut ainsi régler la hauteur de la roue 44' vis-à-vis du fuselage auquel le stabilisateur 43' est solidarisé par son bras latéral 46' qui, en plus de la partie latérale externe 57' comporte la partie latérale interne 59' qui est tubulaire et s'emmanche dans la portion tubulaire d'extrémité latérale 61' solidaire par soudure de la traverse tubulaire 60' rigidement liée à la structure de l'hélicoptère. Cet emmanchement est limité par la venue d'un téton 58', en saillie vers l'extérieur sur la portion de bras 59', en butée dans une encoche en V ménagée dans le bord latéral externe de la partie tubulaire 61' liée à la traverse 60', de sorte qu'il est alors possible d'engager manuellement la broche 63' dans des trous en coïncidence percés d'une part dans la portion de bras 59' et, d'autre part dans la partie tubulaire 61' et la traverse 60'. Si l'on veut fixer par brochage le stabilisateur 43' sur l'hélicoptère après rotation de 90° autour de l'axe horizontal et transversal du bras 46', on retire d'abord la broche 63', on pivote la jambe 45' d'un quart de tour autour de l'axe du bras 46' jusqu'à amener les deux trous opposés 64' d'axe vertical percés dans la traverse 60' et sa portion d'extrémité 61' en coïncidence avec les trous opposés percés dans la portion de bras 59' et on replace la broche 63'.

Dans le second exemple également, la considération de la figure 8 permet de constater que le polygone de sustentation de la version terrestre de l'hélicoptère, délimité sensiblement par un triangle dont les trois sommets correspondent aux points d'appui sur le sol des deux roues 37 des atterrisseurs principaux 36 et des roues 33 de l'atterrisseur auxiliaire avant 32, est considérablement agrandi, dans la version navalisée, et est dans ce cas sensiblement délimité par un pentagone dont les sommets correspondent aux points d'appui sur la plate-forme mouvante non seulement des roues 37 et 33 des atterrisseurs principaux 36 et de l'atterrisseur auxiliaire avant 32, mais également des roues 44 des stabilisateurs latéraux 43, dont la voie est dans cet exemple, légèrement supérieure à celle des deux atterrisseurs principaux 36 (voir également la figure 9), contrairement au premier exemple, dans lequel la voie des deux stabilisateurs latéraux 13 était inférieure à celle des deux atterrisseurs principaux 6 (voir figure 3). Il en résulte que, dans ce second exemple, l'angle critique de stabilité statique peut être porté à 32°, par l'adjonction de stabilisateurs latéraux 43 dont le poids de chacun est très limité et peut être maintenu inférieur à 8 kg.

Dans les deux exemples précédents, le train stabilisateur auxiliaire à deux stabilisateurs latéraux procure incontestablement une augmentation de la stabilité, en particulier transversale, de l'hélicoptère lorsque ce dernier est posé sur une plate-forme mouvante, en statique comme au roulage sur cette plateforme, et ce train stabilisateur permet de plus ce roulage. Mais d'autres équipements et/ou outillages sont nécessaires pour transmettre à l'hélicoptère la puissance motrice nécessaire à son déplacement par roulage sur cette plate-forme, et en particulier pour le tirer longitudinalement ou en virage.

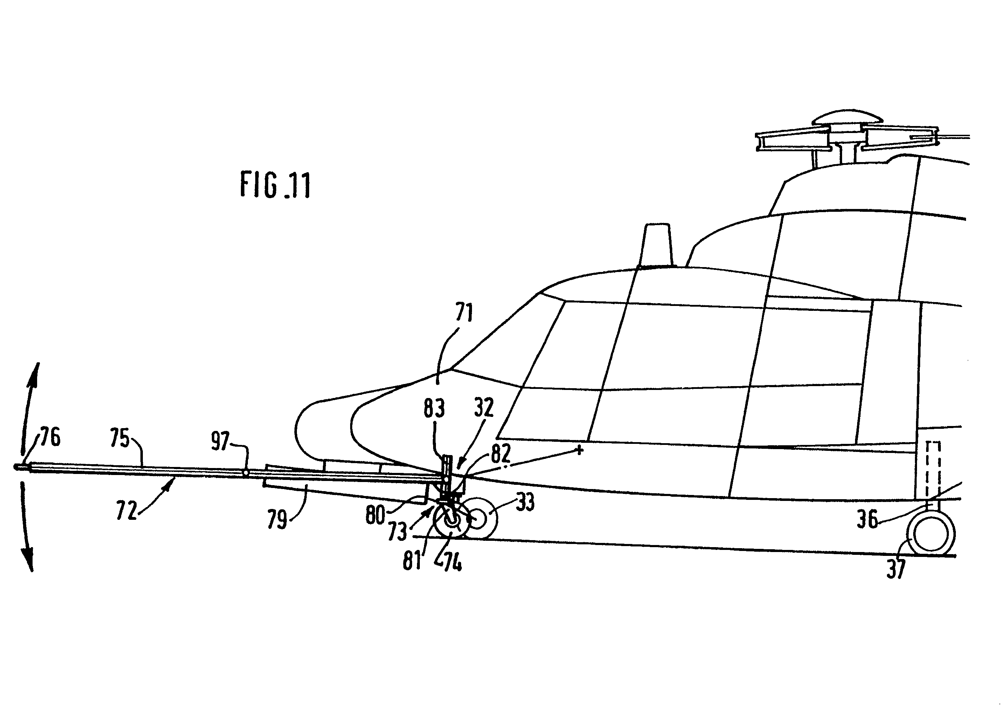

Dans le troisième exemple de réalisation, décrit en référence aux figures 11 à 13, le train stabilisateur auxiliaire est aménagé sous la forme d'un chariot de stabilisation et de remorquage, qui est attelé de manière amovible par un mécanisme d'accouplement et désaccouplement rapide à l'hélicoptère après son appontage, et dételé de l'hélicoptère juste avant son décollage, et qui permet de remorquer l'hélicoptère sur la plate-forme mouvante tout en lui conservant une stabilité améliorée, notamment à l'encontre des vents de travers, et même en virage.

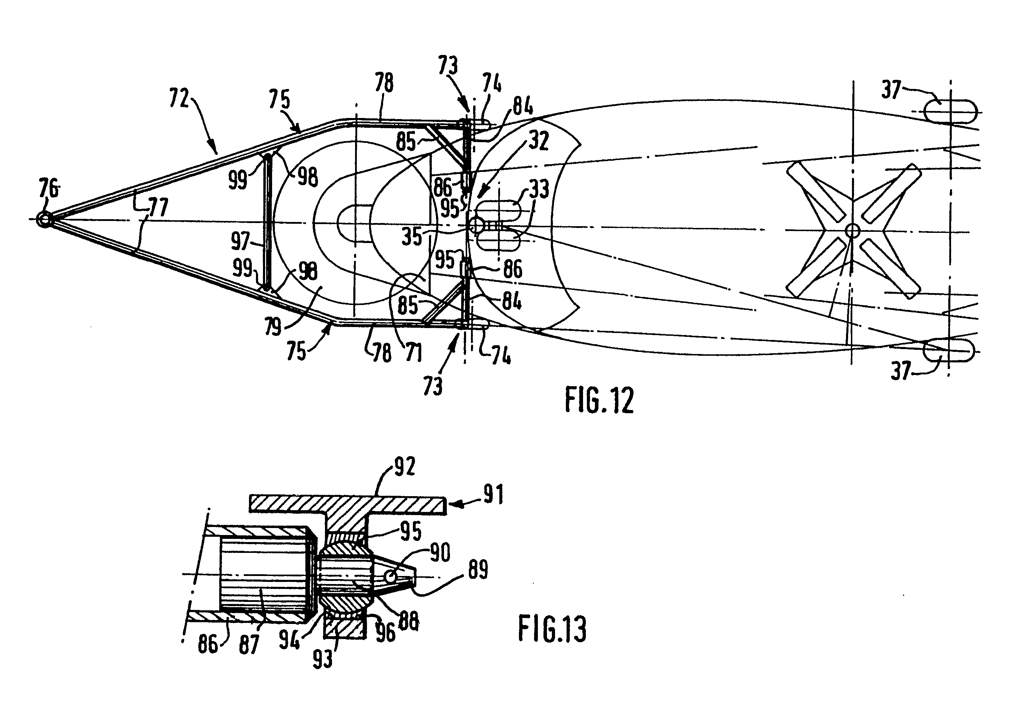

L'hélicoptère embarqué représenté sur les figures 11 et 12 est sensiblement le même que celui des figures 7 à 9, et il est équipé du même train d'atterrissage tricyle, avec un atterrisseur auxiliaire avant 32 à balancier, à deux roues 33 jumelées, et à relevage longitudinal vers l'arrière, sous la partie centrale avant du fuselage 71, et avec deux atterriseurs principaux et latéraux 36, dont chacun est mono-roue, à coulissement direct, et à relevage vers l'arrière et vers l'intérieur dans une soute latérale arrière du fuselage 71.

Le chariot de stabilisation et de remorquage, désigné dans son ensemble par la référence 72, comprend deux stabilisateurs latéraux 73, dont chacun est muni d'une roue stabilisatrice 74, et est solidaire de l'extrémité arrière de l'une respectivement de deux barres de remorquage coudées 75. Ces deux barres coudées 75 sont réunies l'une à l'autre au niveau de leurs extrémités avants formant un anneau d'attelage et de remorquage 76, et elles sont articulées l'une sur l'autre comme des branches de compas, en pivotant l'une par rapport à l'autre autour de l'axe de l'anneau 76. Comme représenté sur la figure 12, les deux barres 75, qui constituent les deux branches latérales du chariot 72, sont coudées de sorte qu'en position d'utilisation de ce dernier, les parties avant et rectilignes 77 des barres 75 forment un V divergeant vers les parties arrière 78, également rectilignes mais orientées longitudinalement par rapport à l'hélicoptère, de façon à dégager entre les deux barres ou branches 75 un espace suffisant pour éviter toute interférence entre les branches 75 et le nez de l'hélicoptère, équipé d'un radôme 79 suspendu sous la pointe avant du fuselage 71.

Comme dans l'exemple précédent, la roue 74 de chaque stabilisateur 73 est montée en roue tirée, qui tourne autour de son axe entre les extrémités des deux branches 81 d'une chape 80 solidaire de l'extrémité inférieure d'une tige cylindrique 82, montée tourillonnante autour de son axe dans un fût tubulaire 83 de jambe verticale, et qui est solidarisé, dans cet exemple, sensiblement à moitié de sa hauteur, sur l'extrémité arrière de la barre 75 correspondante, les branches 81 de la chape 80 étant inclinées d'un même côté de l'axe du fût 83 et de la tige 82, de sorte que cette dernière constitue avec la chape 80 et la roue 74 un équipage mobile tourillonnant librement autour de l'axe du fût 83, et de sorte également que l'axe de rotation de la roue 74 soit décalé du même côté de l'axe du fût 83. Comme dans les exemples précédents, la jambe formée par le fût 83 et la tige 82 renferme un mécanisme de réglage de la position axiale de la tige 82 dans le fût 83, afin d'ajuster la hauteur du stabilisateur 73, et donc la hauteur de la roue 74 vis-à-vis du fuselage 71, en fonction des variations de la charge de l'hélicoptère, et, de plus, le fût 83 peut contenir un organe élastique de grande raideur tendant à repousser la tige 82 et la roue 74 vers le bas, pour favoriser l'appui sur la plate-forme mouvante.

Dans cet exemple également, le fût de jambe 83 est rigidement solidaire, sensiblement à la moitié de sa hauteur, d'un bras latéral 84, d'axe horizontal et sensiblement perpendiculaire à la partie arrière 78 de la barre 75 correspondante. Mais, ce bras 84 est de plus rigidement lié à cette partie arrière 78 de la barre 75 correspondante par une entretoise horizontale 85, et sa partie d'extrémité libre, tournée vers l'autre stabilisateur 73 du chariot 72, est conformée en manchon 86, dans lequel est retenu, par exemple par soudure, un embout massif 87 (voir figure 13). Cet embout 87 se prolonge à l'extérieur du manchon 86 par un arbre de pivot aminci et cylindrique 88, se terminant par une pointe tronconique 89 percée d'un trou transversal de logement d'une goupille 90.

Pour l'accouplement d'un tel chariot 72 à l'hélicoptère, la structure résistance de ce dernier présente, un peu en avant de la jambe 35 de l'atterrisseur avant 32, en position sortie, et latéralement de chaque côté de ce dernier, une ferrure structurale 91, schématiquement représentée sur la figure 13, et qui comporte une embase horizontale et plate 92 rigidement liée au reste de la structure de l'hélicoptère, ainsi qu'une nervure verticale 93, en saillie sous l'embase 92 et s'étendant en direction longitudinale sous l'hélicoptère, et une ouverture circulaire 94, d'axe transversal est percée dans la nervure 93 et coaxiale et identique à l'ouverture 94 présentée par la nervure de l'autre ferrure structurale, symétriquement par rapport au plan longitudinal vertical et médian de l'hélicoptère. Cette ouverture 94 est équipée d'une rotule 95 dont la couronne extérieure 96 est solidarisée par sertissage ou tout autre moyen à l'intérieur de l'alésage 94. Dans l'alésage interne de la rotule 95 est introduit le pivot cylindrique 88 dont la pointe percée 89 dépasse vers l'intérieur de la nervure 93, du côté opposé au manchon 86 du bras 84 correspondant. Ainsi, la mise en place de la goupille 90 au travers de la pointe 89 assure la retenue du pivot 88 à l'intérieur de la rotule 95, elle-même solidarisée par sa couronne extérieure 96 à la ferrure 91, et donc la liaison du bras 84 à la ferrure structurale 91 par un accouplement à mise en place rapide et autorisant non seulement le pivotement du bras 84, et donc des barres 75 et du chariot 72 dans son ensemble, vers le bas ou vers le haut, autour d'un axe transversal situé un peu en avant de l'axe de la jambe 35 de l'atterrisseur avant 32 et autour duquel tourillonnent les roues 33 de cet atterrisseur (voir figure 12), mais également des oscillations angulaires autour de cet axe transversal.

Le chariot 72 est utilisé de la manière suivante : avant l'appontage de l'hélicoptère, les deux branches 75 du chariot sont très écartées l'une de l'autre par pivotement relatif autour de l'axe de l'anneau de manoeuvre 76. Dès que l'hélicoptère a apponté, des personnels d'assistance attachés à la plate-forme mouvante rapprochent les deux branches 75 l'une vers l'autre et de part et d'autre du nez de l'hélicoptère, et ensuite encastrent chacune des deux branches 75 sur la structure résistante de l'hélicoptère en introduisant le pivot 88 à l'extrémité interne du bras latéral 84 correspondant dans l'alésage interne de la rotule 95 fixée dans la ferrure structurale 91 correspondante, puis en positionnant une goupille de retenue 90, comme précisé ci-dessus. Pour éviter ensuite que les deux branches 75 du chariot ne puissent s'écarter l'une de l'autre, ainsi que pour rigidifier le chariot 72 en vue du remorquage de l'hélicoptère sur la plate-forme mouvante, les deux branches 75 sont réunies l'une à l'autre, au niveau de leurs parties avants 77 et à proximité de leurs coudes, par une traverse rigide 97, articulée par chacune de ses extrémités à pivotement sur une attache 98, solidaire de l'une respectivement des deux branches 75, et en saillie vers l'intérieur des deux branches sensiblement dans le plan moyen qu'elles définissent, à l'aide d'un axe de pivot 99. L'un des deux axes 99, qui sont sensiblement perpendiculaires au plan moyen défini par les deux branches 75, est amovible, de sorte que la traverse articulée 97 est désaccouplée de l'une des branches 75, et permet leur écartement avant l'accouplement du chariot 72 à l'hélicoptère, et cet axe 99 amovible est mis en place après le positionnement des deux branches 75 et des stabilisateurs 73 correspondants sur le fuselage de l'hélicoptère.

Le chariot 72 combine ainsi l'augmentation de stabilité de l'hélicoptère à la possibilité de le remorquer par traction longitudinale et même transversale, pour l'entraîner en virage. Dans cette dernière configuration, l'effort latéral exercé sur l'anneau de remorquage 76 introduit dans le fuselage 71 un moment de pivotement autour d'un axe vertical, et les deux roues 33 de l'atterrisseur avant 32 ainsi que les roues 74 du chariot de remorquage 72, qui sont toutes des roues tirées, prennent automatiquement une position d'équilibre accompagnant le mouvement de pivotement du fuselage 71.

Dans cet exemple, on constate que la position des roues stabilisatrices 74 légèrement en avant et latéralement par rapport aux roues 33 de l'atterrisseur avant 32, définit avec les deux roues 37 des atterrisseurs principaux 36 un polygone de sustentation qui est trapézoïdal et considérablement plus élargi que le polygone de sustentation sensiblement triangulaire défini par le train d'atterrissage tricycle de l'hélicoptère.

Au prix d'un renforcement structural d'un coût et d'un poids limités, correspondant uniquement à l'installation des ferrures structurales 91, et à l'aide d'un chariot de remorquage et de stabilisation 72, dont la structure est simple, le coût de réalisation faible et la mise en oeuvre aisée, on peut donner à l'hélicoptère un angle critique de stabilité latérale supérieur à 30°.

## Revendications

1. Dispositif d'augmentation de la stabilité, en particulier latérale, d'un hélicoptère embarqué, à train d'atterrissage tricycle (2, 6) lorqu'il est posé sur une plate-forme mouvante, caractérisé en ce qu'il comprend un train stabilisateur auxiliaire comportant au moins deux stabilisateurs latéraux (13), dont chacun comprend un support rigide (17, 27) qui supporte, par une partie d'extrémité, au moins une roue stabilisatrice (16) de contact avec la plate-forme, et qui est, au moins en position d'utilisation, solidarisé à la structure résistante de l'hélicoptère, à la partie inférieure du fuselage (1) de ce dernier, et décalé latéralement sur l'un respectivement des deux côtés du plan longitudinal vertical et médian (PP) de l'hélicoptère, dans la direction tournée vers l'atterrisseur auxiliaire (2) par rapport aux atterrisseurs principaux et latéraux (6) du train d'atterrissage tricyle, de sorte que les roues stabilisatrices (16) prennent appui sur ladite plate-forme mouvante, de part et d'autre du plan longitudinal et médian de l'hélicoptère (PP) lorsque ce dernier repose sur cette plate-forme par son train d'atterrissage tricyle (2, 6).

2. Dispositif selon la revendication 1, caractérisé en ce que, au moins en position d'utilisation, ledit support rigide (17, 27) de chacun des stabilisateurs latéraux est monté en saillie latéralement par rapport à la partie inférieure de fuselage (1) et sur l'un respectivement des deux côtés dudit fuselage (1).

3. Dispositif selon l'une des revendications 1 et 2, caractérisé en ce que ledit support rigide comporte une jambe (17) qui présente, au moins en position d'utilisation, au moins une partie d'extrémité inférieure (20) sensiblement verticale, supportant chaque roue (16) du stabilisateur latéral (13) correspondant, ladite roue (16) étant, d'une part, montée librement tourillonnante autour de l'axe sensiblement vertical de ladite partie d'extrémité inférieure (20) de la jambe (17), et, d'autre part montée libre en rotation autour de son axe propre.

4. Dispositif selon la revendication 3, caractérisé en ce que ladite jambe (17) comporte un fût tubulaire (19) présentant un alésage interne rectiligne dont l'axe est, au moins en position d'utilisation du stabilisateur (13), sensiblement vertical, et dans lequel est engagée une tige (20) qui tourillonne librement autour de son axe et dont une partie d'extrémité, en saillie à l'extérieur du fût (19), supporte au moins une roue stabilisatrice (16) dont l'axe est perpendiculaire à celui dudit fût (19).

5. Dispositif selon la revendication 4, caractérisé en ce que ladite partie d'extrémité de tige (20) en saillie hors du fût (19) de la jambe (17) est conformée en chape (24) porte-roues, dans laquelle chaque roue (16) stabilisatrie correspondante est montée en rotation autour de son axe propre, qui est décalé par rapport à l'axe de la tige (20), de sorte que chaque roue (16) est entraînée en roue tirée, lorsque l'hélicoptère est déplacé sur la plate-forme mouvante.

6. Dispositif selon l'une des revendications 4 et 5, caractérisé en ce que ladite tige (20) et chaque roue (16) qu'elle supporte sont élastiquement repoussées vers l'extérieur du fût (19) par au moins un organe de rappel élastique à grande raideur (23), au moins partiellement logé dans le fût (19) et/ou autour de la tige (20).

7. Dispositif selon l'une des revendications 1 à 6, caractérisé en ce que chaque stabilisateur latéral (13, 43) comporte un mécanisme de réglage de la position d'au moins une roue stabilisatrice correspondante (16, 44) en hauteur vis-à-vis du fuselage (1, 41).

8. Dispositif selon la revendication 7, telle que rattachée à l'une des revendications 4 à 6, caractérisé en ce que ledit mécanisme de réglage en hauteur d'au moins une roue stabilisatrice (16) comprend un vérin hydraulique logé dans le fût tubulaire (19) de la jambe (17) et qui assure un réglage axial de la position dans ledit fût (19) de la tige (20) supportant la ou les roues stabilisatrices (16).

9. Dispositif selon la revendication 7 telle que rattachée à l'une des revendications 4 à 6, caractérisé en ce que ledit mécanisme de réglage en hauteur d'au moins une roue stabilisatrice (44') est un mécanisme comprenant une rue dentée (111) manoeuvrée par une manivelle (121) et en prise avec un pignon (109) d'entraînement en rotation d'une vis sans fin (101), en position axiale fixe vis-à-vis du fût tubulaire (47') dans lequel elle est au moins partiellement logée et en prise avec un coulisseau (68) guidé en translation axiale dans ledit fût tubulaire (47') et dans lequel est montée tourillonnante une fusée (48') supportant la ou les roues stabilisatrices (44').

10. Dispositif selon l'une des revendications 3 à 9, caractérisé en ce que ledit support rigide (17, 27) comporte également un organe (27) rigide et sensiblement transversal, lié à la jambe correspondante (17) et reliant cette dernière à ladite structure résistante de l'hélicoptère.

11. Dispositif selon l'une des revendications 1 à 10, caractérisé en ce que chaque stabilisateur latéral (13) est relié à demeure à ladite structure de l'hélicoptère et emporté en vol par ce dernier.

12. Dispositif selon la revendication 11, caractérisé en ce qu'il comporte des stabilisateurs stationnaires, dont les supports rigides sont maintenus dans des positions fixes vis-à-vis de ladite structure de l'hélicoptère.

13. Dispositif selon la revendication 11, caractérisé en ce qu'il comporte des stabilisateurs latéraux (13) escamotables, dont chacun comprend un support rigide (17, 27) monté mobile entre deux positions extrêmes, dans chacune desquelles il est destiné à être verrouillé, et dont l'une est une position d'utilisation, dans laquelle la ou les roues stabilisatrices correspondantes (16) sont descendues par rapport au fuselage (1), et l'autre une position de repos, dans laquelle la ou les roues 16 sont relevées sensiblement au niveau du fuselage (1), le support rigide (17, 27) étant déplacé de l'une à l'autre desdites positions par au moins un actionneur de manoeuvre (18).

14. Dispositif selon la revendication 13, telle que rattachée à la revendication 10, caractérisé en ce que ledit organe rigide sensiblement transversal reliant ladite jambe (17) à ladite structure de l'hélicoptère est un axe de pivot (27) sensiblement horizontal et sensiblement perpendiculaire ledit plan longitudinal et médian (PP) de l'hélicoptère, et avec lequel ou autour duquel ladite jambe (17) est montée pivotante en direction sensiblement longitudinale, au moins un actionneur de manoeuvre (18) étant un vérin, et la jambe (17) étant contreventée en position descendue par au moins une contre-fiche.

15. Dispositif selon la revendication 14, caractérisé en ce que ladite jambe (17) est pivotée par un unique vérin hydraulique ou électrique de manoeuvre et de contreventement (18), faisant fonction de contre-fiche pour contreventer la jambe (17) en position descendue.

16. Dispositif selon l'une des revendications 14 et 15, caractérisé en ce que chaque stabilisateur latéral (13) est logé, en position relevée, dans une trappe aménagée dans un petit caisson latéral et caréné (14) fixé sur le côté correspondant de la partie inférieure du fuselage (1).

17. Dispositif selon l'une des revendications 1 à 10, caractérisé en ce que le train stabilisateur auxiliaire est un train additionnel se montant sur l'hélicoptère en adjonction au train d'atterrissage tricycle (32, 36) après l'appontage sur ladite plate-forme mouvante, et se démontant avant le décollage de l'hélicoptère, et dont le support rigide (45, 46) de chaque stabilisateur (43) se solidarise latéralement de manière amovible (63) sur la structure (60) de l'hélicoptère.

18. Dispositif selon la revendication 17, caractérisé en ce que le support (45, 46) de chaque stabilisateur (43) se solidarise de manière amovible sur ladite structure par un mécanisme (57, 58, 59, 61, 63) d'accouplement et de désaccouplement rapide à actionnement manuel.

19. Dispositif selon la revendication 18, tel que rattachée à la revendication 9, caractérisé en ce que ledit organe rigide sensiblement transversal reliant ladite jambe (45) à ladite structure de l'hélicoptère est un bras latéral (46) solidaire de la jambe (45) et qui s'emmanche sur et/ou dans au moins un élément (60) de ladite structure, sur laquelle il est retenu de manière amovible par l'engagement manuel d'au moins une broche (63) dans des orifices coïncidants ménagés dans le bras (46) et dans au moins un élément de structure (60).

20. Dispositif selon la revendication 17, caractérisé en ce que chaque stabilisateur latéral (73) est solidaire d'une partie d'extrémité de l'une respectivement de deux branches latérales (75) d'un chariot stabilisateur et de remorquage (72) sur lequel les parties d'extrémité opposées des deux branches (75) sont réunies au niveau d'un organe de manoeuvre (76).

21. Dispositif selon la revendication 20 telle que rattachée à la revendication 9, caractérisé en ce que ladite jambe (82, 83) de chaque support (73) est rigidement liée à la branche (75) correspondante du chariot (72), et ledit organe rigide essentiellement transversal reliant ladite jambe (82, 83) à la structure de l'hélicoptère (91) est un bras latéral (84) solidaire de ladite jambe et se montant tourillonnant autour d'un axe transversal sur au moins un élément de structure (91) de la partie avant du fuselage (71), par l'intermédiaire d'un pivot à rotule (88, 95) autorisant des oscillations angulaires autour dudit axe transversal.

22. Dispositif selon l'une des revendications 20 et 21, caractérisé en ce que les deux branches (75) du chariot (72) sont montées pivotantes l'une par rapport à l'autre comme des branches de compas et autour d'un axe de pivot permettant l'encastrement latéral de chaque branche (75) et du stabilisateur correspondant (73) sur la structure de l'hélicoptère, du côté correspondant du fuselage (71).

23. Dispositif selon la revendication 22, caractérisé en ce que l'axe de pivot des deux branches (75) l'une par rapport à l'autre est l'axe d'un anneau (76) constituant ledit organe de manoeuvre et formé par la réunion des extrémités des deux branches (75) du côté opposé aux stabilisateurs latéraux (73).

24. Dispositif selon l'une des revendications 20 à 23, caractérisé en ce que les deux branches (75) du chariot (72) sont réunies l'une à l'autre, sensiblement dans leur partie médiane, par au moins une traverse (97) articulée sur chacune d'elles, l'une au moins des deux articulations (98, 99) de chaque traverse (97) comprenant un axe de pivot amovible (99) permettant le montage de la traverse (97) correspondante entre les deux branches (75) après la mise en place de ces dernières sur la structure du fuselage (71).

25. Hélicoptère embarqué, à train d'atterrissage tricycle comprenant deux atterrisseurs principaux latéraux (36) et un atterrisseur auxiliaire (32) avant ou arrière, équipés chacun d'au moins une roue ou roulette (33, 37) caractérisé en ce qu'il comprend de plus un dispositif d'augmentation de la stabilité selon l'une des revendications 1 à 23 précédentes, et en ce que sa structure résistance présente, sur chacun des côtés de la partie inférieure du fuselage (71), dans la direction tournée vers l'atterrisseur auxiliaire (32) par rapport aux atterrisseurs principaux et latéraux (36), au moins un élément structural (91) d'attache du support (84, 83, 82) d'un stabilisateur latéral (73) dudit train stabilisateur auxiliaire.

26. Hélicoptère embarqué selon la revendication 25, dont le train d'atterrissage tricycle comprend un atterrisseur auxiliaire avant (32) à au moins une roue tirée (33) tourillonnant autour de l'axe de la jambe (35) de l'atterrisseur auxiliaire avant (32) et équipé ou destiné à être équipé d'un dispositif d'augmentation de la stabilité comprenant un chariot stabilisateur et de remorquage (72) selon l'une des revendications 20 à 23, caractérisé en ce que ledit pivot à rotule (88-95) interposé entre le bras latéral (84) d'un stabilisateur (73) et la structure de l'hélicoptère est retenu dans l'un de deux orifices (96) coaxiaux et transversaux, ménagés chacun dans la nervure (93) sensiblement longitudinale de l'une de deux ferrures structurales (91) montées sur la structure de l'hélicoptère, de sorte que ledit axe transversal de pivotement des branches (75) du chariot (72) sur la structure de l'hélicoptère soit situé en avant de l'axe de tourillonnement de chacune des roues tirées (33) de l'atterrisseur auxiliaire avant (32).

27. Hélicoptère embarqué selon la revendication 25, dont le train d'atterrissage tricycle comprend un atterrisseur auxiliaire avant (32), et équipé ou destiné à être équipé d'un dispositif d'augmentation de la stabilité comprenant deux stabilisateurs latéraux (32) dont chacun se monte de manière amovible par brochage manuel (63) selon la revendication 18 précédente, caractérisé en ce que la structure résistance de l'hélicoptère supporte, rigidement et en saillie sous la partie inférieure du fuselage, et en position fixe sensiblement à mi-distance entre l'atterrissseur auxiliaire avant (32) et les atterrisseurs principaux et latéraux (36), deux parties (61) au moins partiellement tubulaires de traverse rigide (60) constituant de préférence les deux parties d'extrémité latérale d'une même traverse (60), et dont chacune s'étend sensiblement horizontalement et partiellement en saillie latéralement à l'extérieur d'un côté respectivement de la partie inférieure du fuselage (41) par sa portion tubulaire qui s'ouvre latéralement vers l'extérieur et est percée de deux trous coaxiaux d'axe sensiblement longitudinal par rapport à l'hélicoptère, afin de recevoir par emmanchement le bras latéral (46), traversé par un passage d'axe sensiblement longitudinal, d'un stabilisateur (43) retenu en position par rapport à l'hélicoptère par une broche (63) engagée dans lesdits trous et dans ledit passage mis en coïncidence.

28. Hélicoptère embarqué selon la revendication 25, dont le train d'atterrissage tricycle comprend un atterrisseur auxiliaire avant (2), et équipé ou destiné à être équipé d'un train stabilisateur auxiliaire à stabilisateurs latéraux (13) escamotables, selon l'une des revendications 13 à 15, caractérisé en ce que le fuselage (1) de l'hélicoptère porte, en port-à-faux latéralement vers l'extérieur, de chaque côté de la partie inférieure du fuselage, et entre l'atterrisseur auxiliaire avant (2) et les atterrisseurs principaux et latéraux (6), un petit caisson (14) caréné et allongé en direction longitudinale, qui délimite une trappe interne de logement au moins partiel de la jambe (17) et de la ou des roues (16) d'un stabilisateur latéral escamotable (13), la structure de l'hélicoptère présentant au moins une première attache structurale de support de l'axe (27) de pivot de la jambe (17) correspondante, et, en arrière de ladite première attache structurale, au moins une seconde attache structurale (30) de support et d'articulation d'un vérin de manoeuvre et de contreventement (18) également articulé par ailleurs (29, 28) sur ladite jambe (17).

**Ansprüche**

1. Vorrichtung zur Erhöhung der Sterbilität insbesondere der seitlichen Stabilität, eines einschiffbaren Hubschraubers mit dreirädrigem Fahrwerk (2, 6), wenn dieser auf einer sich bewegenden Plattform gelandet ist, dadurch gekennzeichnet, daß sie ein Hilfsstabilisatorfahrwerk mit wenigstens zwei Seitensstabilisatoren (13) aufweist, von denen jeder eine starre Stütze (17, 27) umfaßt, die an einem Endbereich wenigstens ein Stabilisierungsrad (16) für den Kontakt mit der Plattform trägt und wenigstens in der Arbeitsposition im unteren Teil des Rumpfes (1) des Hubschraubers mit dem unbeweglichen Aufbau desselben verbunden ist und seitlich jeweils auf eine der zwei Seiten der longitudinalen vertikalen Mittelebene (PP) des Hubschraubers in der in bezug auf die seitlichen Hauptfahrwerke (6) des Dreiradfahrwerkes zum Hilfsfahrwerk (2) weisenden Richtung versetzt ist, derart, daß sich die Stabilisierungsräder (16) auf der sich bewegenden Plattform auf beiden Seiten der longitudinalen Mittelebene des Hubschraubers (PP) abstützen, wenn der letztere mit seinem Dreiradfahrwerk (2, 6) auf dieser Plattform steht.

2. Vorrichtung gemäß Anspruch 1, dadurch gekennzeichnet, daß wenigstens in der Arbeitsposition die starre Stütze (17, 27) eines jeden der Seitenstabilisatoren in bezug auf den unteren Teil des Rumpfes (1) seitlich vorstehend und jeweils auf einer der zwei Seiten des Rumpfes (1) angebracht ist.

3. Vorrichtung gemäß einem der Ansprüche 1 und 2, dadurch gekennzeichnet, daß die starre Stütze ein Bein (17) enthält, das wenigstens in der Arbeitsposition wenigstens einen im wesentlichen vertikalen unteren Endbereich (20) aufweist, der jeweils das entsprechende Rad (16) des Seitenstabilisators (13) trägt, wobei das Rad (16) einerseits um die im wesentlichen vertikale Achse des unteren Endbereichs (20) des Beins (17) frei schwenkbar und andererseits um seine eigene Achse frei drehbar angebracht ist.

4. Vorrichtung gemäß Anspruch 3, dadurch gekennzeichnet, daß das Bein (17) einen röhrenförmigen Schaft (19) enthält, der eine innere geradlinige Bohrung aufweist, deren Achse wenigstens in der Arbeitsposition des Stabilisators (13) im wesentlichen vertikal ist, und in die eine Stange (20) eingreift, die um ihre Achse frei schwenkbar ist und von der ein aus dem Schaft (19) herausragender Endbereich wenigstens ein Stabilisierungsrad (16) trägt, dessen Achse zu derjenigen des Schaftes (19) senkrecht orientiert ist.

5. Vorrichtung gemäß Anspruch 4, dadurch gekennzeichnet, daß der aus dem Schaft (19) des Beins (17) herausragende Endbereich der Stange (20) als Gabel-Radhalter (24) ausgebildet ist, in dem jedes entsprechende Stabilisierungsrad (16) um seine eigene Achse drehbar angebracht ist, welche in bezug auf die Achse der Stange (20) versetzt ist, derart, daß jedes Rad (16) als gezogenes Rad vorwärts gezogen wird, wenn der Hubschrauber auf der sich bewegenden Plattform verschoben wird.

6. Vorrichtung gemäß einem der Ansprüche 4 und 5, dadurch gekennzeichnet, daß die Stange (20) und jedes von ihr getragene Rad (16) durch wenigstens ein elastisches Rückstellelement mit großer Steifigkeit, das wenigstens teilweise im Schaft (19) und/oder um die Stange (20) angeordnet ist, aus dem Schaft (19) elastisch herausgedrückt werden.

7. Vorrichtung gemäß einem der Ansprüche 1 bis 6, dadurch gekennzeichnet, daß jeder Seitenstabilisator (13, 43) einen Mechanismus zum Einstellen der Position wenigstens eines entsprechenden Stabilisierungsrades (16, 44) auf eine Höhe gegenüber dem Rumpf (1, 41) aufweist.

8. Vorrichtung gemäß Anspruch 7 sowie in Verbindung mit einem der Ansprüche 4 bis 6, dadurch gekennzeichnet, daß der Höheneinstellmechanismus wenigstens eines Stabilisierungsrades (16) einen Arbeitszylinder umfaßt, der sich im röhrenförmigen Schaft (19) des Beins (17) befindet und eine axiale Einstellung der Position der das oder die stabilisierenden Räder (16) tragenden Stange (20) im Schaft (19) gewährleistet.

9. Vorrichtung gemäß Anspruch 7 sowie in Verbindung mit einem der Ansprüche 4 bis 6, dadurch gekennzeichnet, daß der Höheneinstellmechanismus wenigstens eines Stabilisierungsrades (44') ein Mechanismus ist, der ein mittels einer Kurbel (121) betätigtes Zahnrad (111) umfaßt, das in ein Drehantriebritzel (109) einer Schraube ohne Ende (101) eingreift, die sich in einer in axialer Richtung festen Position gegenüber dem röhrenförmigen Schaft (47') befindet, in den sie wenigstens teilweise eingesetzt ist und mit einem Läufer (68) in Eingriff ist, der in axialer Verschiebungsrichtung im röhrenförmigen Schaft (47') geführt wird und in dem eine das oder die Stabilisierungsräder (44') tragende Schnecke (48') drehbar angebracht ist.

10. Vorrichtung gemäß einem der Ansprüche 3 bis 9, dadurch gekennzeichnet, daß die starre Stütze (17, 27) gleichermaßen ein starres und im wesentlichen transversales Element (27) aufweist, das mit dem entsprechenden Bein (17) verbunden ist und das letztere mit dem unbeweglichen Aufbau des Helikopters verbindet.

11. Vorrichtung gemäß einem der Ansprüche 1 bis 10, dadurch gekennzeichnet, daß jeder Seitenstabilisator (13) dauerhaft mit dem Aufbau des Hubschraubers verbunden ist und während des Fluges vom letzteren mitgenommen wird.

12. Vorrichtung gemäß Anspruch 11, dadurch gekennzeichnet, daß sie stationäre Stabilisatoren aufweist, deren starre Stützen in festen Positionen gegenüber dem Aufbau des Hubschraubers gehalten werden.

13. Vorrichtung gemäß Anspruch 11, dadurch gekennzeichnet, daß sie einklappbare Seitenstabilisatoren (13) aufweist, von denen jeder eine starre Stütze (17, 27) umfaßt, die zwischen zwei Endpositionen beweglich ist, in denen sie jeweils eingerastet ist und von denen eine eine Arbeitsposition ist, in der das oder die entsprechenden Stabilisierungsräder (16) in bezug auf den Rumpf (1) abgesenkt sind, und die andere eine Ruheposition ist, in der das oder die Räder (16) im wesentlichen auf das Niveau des Rumpfes (1) hochgezogen sind, wobei die starre Stütze (17, 27) von einer in die andere der Positionen durch wenigstens ein Manövrierbetätigungselement (18) verschoben wird.

14. Vorrichtung gemäß Anspruch 13 sowie in Verbindung mit Anspruch 10, dadurch gekennzeichnet, daß das im wesentlichen transversale starre Element, das das Bein (17) mit dem Aufbau des Hubschraubers verbindet, eine im wesentlichen horizontale und zur longitudinalen Mittelebene (PP) des Hubschraubers im wesentlichen senkrechte Schwenkachse (27) ist, an der oder um die das Bein (17) in der im wesentlichen longitudinalen Richtung schwenkbar angebracht ist, wobei wenigstens ein Manövrierbetätigungselement (18) ein Zylinder ist und wobei das Bein (17) in der abgesenkten Position durch wenigstens eine Strebe versteift wird.

15. Vorrichtung gemäß Anspruch 14, dadurch gekennzeichnet, daß das Bein (17) durch einen einzigen hydraulischen oder elektrischen Bewegungs- oder Versteifungszylinder (18) geschwenkt wird, der die Funktion einer Strebe besitzt, um das Bein (17) in der abgesenkten Position zu versteifen.

16. Vorrichtung gemäß einem der Ansprüche 14 und 15, dadurch gekennzeichnet, daß jeder Seitenstabilisator (13) in der hochgezogenen Position in eine Klappe eingesetzt ist, die in einem stromlinienförmigen seitlichen Kasten (14) angeordnet ist, der an der entsprechenden Seite des unteren Bereichs des Rumpfes (1) befestigt ist.

17. Vorrichtung gemäß einem der Ansprüche 1 bis 10, dadurch gekennzeichnet, daß das Hilfsstabilisatorfahrwerk ein zusätzliches Fahrwerk ist, das nach der Landung auf der sich bewegenden Plattform in Ergänzung zum Dreiradfahrwerk (32, 36) am Helikopter ausgefahren wird und das vor dem Abheben des Hubschraubers eingefahren wird, wobei sich die starre Stütze (45, 46) eines jeden Stabilisators (43) auf in seitlicher Richtung unbewegliche Weise (63) mit dem Aufbau (60) des Hubschraubers verbindet.

18. Vorrichtung gemäß Anspruch 17, dadurch gekennzeichnet, daß sich die Stütze (45, 46) eines jeden Stabilisators (43) mittels eines handbetätigten Mechanismus (57, 58, 59, 61, 63) für die schnelle Ankopplung und Entkopplung auf unbewegliche Weise mit dem Aufbau verbindet.

19. Vorrichtung gemäß Anspruch 18 sowie in Verbindung mit Anspruch 9, dadurch gekennzeichnet, daß das im wesentlichen transversale starre Element, das das Bein (45) mit dem Aufbau des Hubschraubers verbindet, ein einteilig mit dem Bein (45) ausgebildeter Seitenarm (46) ist, der auf und/oder in wenigstens einem Element (60) des Aufbaus steckt, auf dem er durch den manuellen Eingriff wenigstens eines Zapfens (63) in im Arm (46) und in wenigstens einem Element des Aufbaus (60) vorgesehenen koinzierenden Öffnungen unbeweglich gehalten wird.

20. Vorrichtung gemäß Anspruch 17, dadurch gekennzeichnet, daß jeder Seitenstabilisator (73) mit einem Endbereich jeweils eines von zwei seitlichen Schenkeln (75) eines Stabilisierungs- und Schleppgestells (72), bei dem die entgegengesetzten Endbereiche der zwei Schenkel (75) auf Höhe eines Manövrierelementes (76) miteinander verbunden sind, verbunden ist.

21. Vorrichtung gemäß Anspruch 20 sowie in Verbindung mit Anspruch 9, dadurch gekennzeichnet, daß das Bein (82, 83) einer jeden Stütze (73) mit dem entsprechenden Schenkel (75) des Gestells (72) starr verbunden ist, wobei das im wesentlichen transversale starre Element, das das Bein (82, 83) mit dem Aufbau des Hubschraubers (91) verbindet, ein Seitenarm (84) ist, der mit dem Bein einteilig ausgebildet ist und sich um eine transversale Achse drehbar über einen dazwischen eingesetzten Kugelzapfen (88, 95), der Drehschwingungen um die transversale Achse erlaubt, zu einem Aufbauelement (91) des vorderen Teils des Rumpfes (71) erstreckt.

22. Vorrichtung gemäß einem der Ansprüche 20 und 21, dadurch gekennzeichnet, daß die zwei Schenkel (75) des Gestells (72) wie die Schenkel eines Zirkels gegeneinander und um eine Schwenkachse schwenkbar sind, wodurch eine seitliche Einspannung eines jeden Schenkels (75) und des entsprechenden Stabilisators (73) am Aufbau des Hubschraubers auf der entsprechenden Seite des Rumpfes (71) ermöglicht wird.

23. Vorrichtung gemäß Anspruch 22, dadurch gekennzeichnet, daß die Achse der gegenseitigen Schwenkung der zwei Schenkel (75) die Achse einer Öse (76) ist, die das Manövrierelement bildet und durch die Verbindung der Enden der zwei Schenkel (75) auf der den Seitenstabilisatoren (73) gegenüberliegenden Seite ausgebildet wird.

24. Vorrichtung gemäß einem der Ansprüche 20 bis 23, dadurch gekennzeichnet, daß die zwei Schenkel (75) des Gestells (72) im wesentlichen in ihrem Mittelteil durch wenigstens einen an jedem von ihnen angelenkten Querträger (97) miteinander verbunden sind, wobei wenigstens eines der zwei Gelenke (98, 99) eines jeden Querträgers (97) eine unbewegliche Schwenkachse (99) umfaßt, die den Einbau des entsprechenden Querträgers (97) zwischen die zwei Schenkel (75) gestattet, nachdem die letzteren am Aufbau des Rumpfes (71) angebracht worden sind.

25. Einschiffbarer Hubschrauber mit Dreiradfahrwerk, das zwei seitliche Hauptfahrwerke (36) und ein vorderes oder hinteres Hilfsfahrwerk (32) umfaßt, die jeweils mit wenigstens einem Rad oder einer Rolle (33, 37) ausgerüstet sind, dadurch gekennzeichnet, daß er außerdem eine Vorrichtung zur Erhöhung der Stabilität gemäß einem der vorangehenden Ansprüche 1 bis 23 umfaßt und daß sein unbeweglicher Aufbau auf beiden Seiten des unteren Teils des Rumpfes (71) in einer in bezug auf die seitlichen Hauptfahrwerke (36) auf das Hilfsfahrwerk (32) weisenden Richtung wenigstens ein Aufbauelement (91) für die Befestigung des Trägers (84, 83, 82) eines Seitenstabilisators (73) des Hilfsstabilisatorfahrwerkes aufweist.

26. Einschiffbarer Hubschrauber gemäß Anspruch 25, dessen Dreiradfahrwerk ein vorderes Hilfsfahrwerk (32) mit wenigstens einem um die Achse des Beins (35) des vorderen Fahrwerks (32) schwenkbaren, gezogenen Rad (33) umfaßt und mit einer Vorrichtung zur Erhöhung der Stabilität mit einem Stabilisator- und Schleppgestell (72) gemäß einem der Ansprüche 20 bis 23 ausgerüstet ist oder dazu vorgesehen ist, mit einer solchen Vorrichtung ausgerüstet zu werden, dadurch gekennzeichnet, daß der zwischen den Seitenarm (84) eines Stabilisators (73) und den Aufbau des Hubschraubers eingesetzte Kugelzapfen (88 bis 95) in einer von zwei koaxialen und transversalen Öffnungen gehalten wird, die jeweils in der im wesentlichen longitudinalen Rippe (93) eines von zwei am Aufbau des Hubschraubers angebrachten strukturellen Beschlägen (91) angeordnet sind, derart, daß die transversale Schwenkachse der Schenkel (75) des Gestells (72) am Aufbau des Hubschraubers vor der Schwenkachse eines jeden der gezogenen Räder (33) des vorderen Hilfsfahrwerks (32) angeordnet ist.

27. Einschiffbarer Hubschrauber gemäß Anspruch 25, dessen Dreiradfahrwerk ein vorderes Hilfsfahrwerk (32) umfaßt und der mit einer Vorrichtung zur Erhöhung der Stabilität mit zwei Seitenstabilisatoren (43), von denen jeder durch manuelle Befestigung (63) gemäß dem vorangehenden Anspruch 18 unbeweglich angebracht ist, ausgerüstet ist oder dazu vorgesehen ist, mit einer solchen Vorrichtung ausgerüstet zu werden, dadurch gekennzeichnet, daß der unbewegliche Aufbau des Hubschraubers starr und unter dem unteren Teil des Rumpfes hervorstehend und in einer im wesentlichen in der Mitte zwischen dem vorderen Hilfsfahrwerk (32) und den seitlichen Hauptfahrwerken (36) befindlichen festen Position zwei wenigstens teilweise röhrenförmige Teile (61) eines starren Trägers (60) trägt, die vorzugsweise die zwei seitlichen Endbereiche desselben Querträgers (60) bilden und von denen sich jede im wesentlichen horizontal und von der jeweiligen Seite des unteren Teils des Rumpfes (41) mit seinem röhrenförmigen Bereich seitlich nach außen teilweise hervorsteht, wobei sich der röhrenförmige Bereich in seitlicher Richtung nach außen öffnet und von zwei koaxialen Löchern mit einer in bezug auf den Hubschrauber im wesentlichen longitudinalen Achse durchsetzt ist, um durch einen Einsteckvorgang den von einem Durchlaß mit im wesentlichen longitudinaler Achse durchsetzten Seitenarm (46) eines Stabilisators (43) aufzunehmen, der mittels eines Zapfens (63), der in die Löcher und in den zur Koinzidenz gebrachten Durchlaß eingreift, in bezug auf den Hubschrauber in Position gehalten wird.

28. Einschiffbarer Hubschrauber gemäß Anspruch 25, dessen Dreiradfahrwerk ein vorderes Hilfsfahrwerk (2) umfaßt und der mit einem Hilfsstabilisatorfahrwerk mit einklappbaren Seitenstabilisatoren (13) gemäß einem der Ansprüche 13 bis 15 ausgerüstet ist oder dazu vorgesehen ist, mit einem solchen Hilfsstabilisatorfahrwerk ausgerüstet zu werden, dadurch gekennzeichnet, daß der Rumpf (1) des Hubschraubers auf jeder Seite des unteren Teils des Rumpfes seitlich nach außen gerichtet und freitragend und zwischen dem vorderen Hilfsfahrwerk (2) und den seitlichen Hauptfahrwerken (6) ein kleines stromlinienförmiges und in Längsrichtung langgestrecktes Fach (14) trägt, das eine Innenklappe begrenzt, die wenigstens teilweise das Bein (17) und das oder die Räder (16) eines einziehbaren Seitenstabilisators (13) aufnimmt, wobei der Aufbau des Hubschraubers wenigstens eine erste strukturelle Unterstützung der Schwenkachse (27) des entsprechenden Beins (17) und hinter der ersten strukturellen Unterstützung wenigstens eine zweite strukturelle Unterstützung (30) und Anlenkung eines Manövrier- und Versteifungszylinders (18), der andererseits (29, 28) auch am Bein (17) angelenkt ist, aufweist.

## Claims

1. A device for increasing the stability, especially the lateral stability, of a helicopter placed on board, having a tricycle landing gear (2, 6) when it is set down on a moving platform, characterized in that it comprises an auxiliary stabilizing gear comprising at least two lateral stabilizers (13), each one of which comprises a rigid support (17, 27) which supports, by one end part, at least one stabilizing wheel (16) for contact with the platform, and which is, at least in the position of use, made integral with the resistant structure of the helicopter, at the lower part of the fuselage (1) of the latter, and offset laterally on one respectively of both sides of the vertical and median longitudinal plane (PP) of the helicopter, in the direction turned towards the auxiliary undercarriage (2) in relation to the main and lateral undercarriages (6) of the tricycle landing gear, in such a manner that the stabilizing wheels (16) are supported on said moving platform, on both sides of the longitudinal and median plane of the helicopter (PP) when the latter rests on this platform by its tricycle landing gear (2, 6).

2. The device as claimed in claim 1, characterized in that, at least in the position of use, such rigid support (17, 27) of each one of the lateral stabilizers is mounted to project laterally in relation to the lower part of fuselage (1) and on one respectively of both sides of said fuselage (1).

3. The device as claimed in one of claims, and 2, characterized in that said rigid support comprises a leg (17) which exhibits, at least in the position of use, at least one substantially vertical lower end part (20), supporting each wheel (16) of the corresponding lateral stabilizer (13), said wheel (16) being, on the one hand, mounted to turn freely about the substantially vertical axis of said lower end part (20) of the leg (17) and, on the other hand, mounted so as to be free in rotation about its own axis.

4. The device as claimed in claim 3, characterized in that said leg (17) comprises a tubular shaft (19) exhibiting a rectilinear internal bore, the axis of which is, at least in the position of use of the stabilizer (13), substantially vertical, and in which there is engaged a rod (20) which turns freely about its axis and an end part of which, projecting outside the shaft (19), supports at least one stabilizing wheel (16), the axis of which is perpendicular to that of said shaft (19).

5. The device as claimed in claim 4, characterized in that said end part of rod (20) projecting outside the shaft (19) of the leg (17) is conformed as a wheel-carrying cap (24), in which each corresponding stabilizing wheel (16) is mounted in rotation about its own axis, which is offset in relation to the axis of the rod (20), in such a manner that each wheel (16) is entrained as a drawn wheel, when the helicopter is moved on the moving platform.

6. The device as claimed in claim 4 characterized in that said rod (20) and each wheel (16) which it supports are resiliently pushed back towards the outside of the shaft (19) by at least one resilient restoring component having high stiffness (23), which is at least partially accommodated in the shaft (19) and/or about the rod (20).

7. The device as claimed in one of claims 1 to 6 characterized in that each lateral stabilizer (13, 43) comprises a mechanism for regulating the position of at least one corresponding stabilizing wheel (16, 44) in height in relation to the fuselage (1, 41).

8. The device as claimed in claim 7, as appendant to one of claims 4 to 6, characterized in that said mechanism for regulating the height of at least one stabilizing wheel (16) comprises a hydraulic jack accommodated in the tubular shaft (19) of the leg (17) and which ensures an axial regulation of the position in said shaft (19) of the rod (20) supporting the stabilizing wheel or wheels (16).

9. The device as claimed in claim 7, as appendant to one of claims 4 to 6, characterized in that said mechanism for regulating the height of at least one stabilizing wheel (44') is a mechanism comprising a toothed wheel (111) operated by a crank (121) and in engagement with a pinion (109) for entrainment in rotation of an endless screw (101), in an axial position fixed in relation to the tubular shaft (47') in which it is at least partially accommodated and in engagement with a slider (68) guided in axial translation in said tubular shaft (47') and in which a spindle (48') supporting the stabilizing wheel or wheels (44') is mounted so as to turn.

10. The device as claimed in one of claims 3 to 9 characterized in that said rigid support (17, 27) likewise comprises a rigid and substantially transverse component (27), connected to the corresponding leg (17) and connecting the latter to said resistant structure of the helicopter.

11. The device as claimed in one of claims 1 to 10 characterized in that each lateral stabilizer (13) is connected permanently to said structure of the helicopter and carried in flight by the latter.

12. The device as claimed in claim 11, characterized in that comprises stationary stabilizers, the rigid supports of which are maintained in positions which are fixed in relation to said structure of the helicopter.

13. The device as claimed in claim 11, characterized in that comprises retractable lateral stabilizers (13), each one of which comprises a rigid support (17, 27) mounted so as to be movable between two extreme positions, in each one of which it is intended to be locked, and one of which is a position of use, in which the corresponding stabilizing wheel or wheels (16) have descended in relation to the fuselage (1), and the other a position of rest, in which the wheel or wheels (16) are raised substantially to the level of the fuselage (1), the rigid support (17, 27) being, displaced from one to the other of said positions by at least one operating actuator (18).

14. The device as claimed in claim 13 ; as appendant to claim 10, characterized in that said substantially transverse rigid component connecting said leg (17) to said structure of the helicopter is a pivot axle (27) which is substantially horizontal and substantially perpendicular to said longitudinal and median plane (PP) of the helicopter, and with which or about which said leg (17) is mounted so as to pivot in a substantially longitudinal direction, at least one operating actuator (18) being a jack, and the leg (17) being crossbraced in the lowered position by at least one strut.

15. The device as claimed in claim 14, characterized in that said leg (17) is pivoted by a single hydraulic or electrical operating and crossbracing jack (18), fulfilling the function of strut for crossbracing the leg (17) in the lowered position.

16. The device as claimed in one of claims 14 and 15 characterized in that each lateral stabilizer (13) is accommodated, in the raised position, in a trap provided in a small lateral and faired vessel (14) fixed on the corresponding side of the lower part of the fuselage (1).

17. The device as claimed in one of claims 1 to 10 characterized in that the auxiliary stabilizing gear is an additional gear mounted on the helicopter in addition to the tricycle landing gear (32, 36) after alighting on said moving platform, and demounted before the takeoff of the helicopter, and with which the rigid support (45, 46) of each stabilizer (43) is made integral laterally in a removable manner (63) on the structure (60) of the helicopter.

18. The device as claimed in claim 17, characterized in that the support (45, 46) of each stabilizer (43) is made integral in a removable manner on said structure by a manually operated quick-acting coupling and uncoupling mechanism (57, 58, 59, 61, 63).

19. The device as claimed in claim 18, as appendant to claim 9, characterized in that said substantially transverse rigid component connecting said leg (45) to said structure of the helicopter is a lateral arm (46) which is integral with the leg (45) and which is fitted onto and/or into at least one element (60) of said structure, on which it is retained in a removable manner by the manual engagement of at least one pin (63) in coincident orifices formed in the arm (46) and in at least one structural element (60).

20. The device as claimed in claim 17, characterized in that each lateral stabilizer (73) is integral with an end part of one respectively two lateral branches (75) of a stabilizing and towing trolley (72) on which the opposite end parts of the two branches (75) are joined at an operating component (76).

21. The device as claimed in claim 20, as appendant to claim 9, characterized in that said leg (82, 83) of each support (73) is rigidly connected to the corresponding branch (75) of the trolley (72), and said essentially transverse rigid component connecting said leg (82, 83) to the structure of the helicopter (91) is a lateral arm (84) which is integral with said leg and is mounted so as to turn about a transverse axis on at least one structural element (91) of the front part of the fuselage (71), by means of a ball pivot (88, 95) permitting angular oscillations about said transverse axis.

22. The device as claimed in one of claims 20 to 21, characterized in that the two branches (75) of the trolley (72) are mounted so as to pivot in relation to one another in the manner of compass branches and about a pivot axis permitting the lateral embedding of each branch (75) and of the corresponding stabilizer (73) on the structure of the helicopter, on the corresponding side of the fuselage (71).

23. The device as claimed in claim 22, wherein the pivot axis of the two branches (75) in relation to one another is the axis of a ring (76) constituting said operating component and formed by the joining of the ends of the two branches (75) on the side opposite the lateral stabilizers (73).

24. The device as claimed in one of claims 20 to 23 wherein the two branches (75) of the trolley (72) are joined to one another, substantially in their median part, by at least one crossmember (97) articulated on each one of them, at least one of the two articulations (98, 99) of each crossmember (97) comprising a removable pivot axle (99) permitting the mounting of the corresponding crossmember (97) between the two branches (75) after the placing in position of the latter on the structure of the fuselage (71).

25. A helicopter placed on board, having a tricycle landing gear comprising two main lateral undercarriages (36) and a front or rear auxiliary undercarriage (32), each equipped with at least one wheel or small wheel (33) characterized in that the helicopter further comprises a device for increasing the stability as claimed in one of the preceding claims 1 to 23, and in that its resistant structure exhibits, on each one of the sides of the lower part of the fuselage (71), in the direction turned towards the auxiliary undercarriage (32) in relation to the main and lateral undercarriages (36), at least one structural element (91) for fastening the support (84, 83, 82) of a lateral stabilizer (73) of said auxiliary stabilizing gear.

26. The helicopter placed on board as claimed in claim 25, the tricycle landing gear of which comprises a front auxiliary undercarriage (32) having at least one drawn wheel (33) turning about the axis of the leg (35) of the front auxiliary undercarriage (32) and equipped or intended to be equipped with a device for increasing the stability comprising a stabilizing and towing trolley (72) as claimed in one of claims 20 to 23, characterized in that said ball pivot (88-85) interposed between the lateral arm (84) of a stabilizer (73) and the structure of the helicopter is retained in one of two coaxial and transverse orifices (96), each formed in the substantially longitudinal rib (93) of one of two structural braces (91) mounted on the structure of the helicopter, in such a manner that said transverse pivot axis of the branches (75) of the trolley (72) on the structure of the helicopter is situated in front of the turning axis of each one of the drawn wheels (33) of the front auxiliary undercarriage (32).

27. The helicopter placed on board as claimed in claim 25, the tricycle landing gear of which comprises a front auxiliary undercarriage (32), and equipped or intended to be equipped with a device for increasing the stability comprising two lateral stabilizers (43), each one of which is mounted in a removable manner by manual pinning (63) as claimed in the preceding claim 18, characterized in that the stability structure of the helicopter supports, rigidly, and projecting below the lower part of the fuselage, and in a position fixed substantially at mid-distance between the front auxiliary undercarriage (32) and the main and lateral undercarriages (36), two at least partially tubular parts (61) of rigid crossmember (60) preferably constituting the two lateral end parts of a same crossmember (60), and each one of which extends substantially horizontally and partially projecting laterally outside on one side respectively of the lower part of the fuselage (41) by its tubular portion which opens laterally towards the outside and is pierced by two coaxial holes of substantially longitudinal axis in relation to the helicopter, in order to receive by introduction fitting the lateral arm (46), traversed by a passage of substantially longitudinal axis, of a stabilizer (43) retained in position in relation to the helicopter by a pin (63) engaged in said holes and in said passage placed in coincidence.

28. The helicopter placed on board as claimed in claim 25, the tricycle landing gear of which comprises a front auxiliary undercarriage (2), and equipped or intended to be equipped with an auxiliary stabilizing gear having retractable lateral stabilizers (13), as claimed in one of claims 13 to 15, characterized in that the fuselage (1) of the helicopter carries, overhanging laterally towards the outside, on each side of the lower part of the fuselage, and between the front auxiliary undercarriage (2) and the main and lateral undercarriages (6), a small vessel (14) which is faired and elongate in the longitudinal direction, which delimits an internal trap for accommodating at least partially the leg (17) and the wheel or wheels (16) of a retractable lateral stabilizer (13), the structure of the helicopter exhibiting at least one first structural fastening for supporting the pivot axle (27) of the corresponding leg (17), and, to the rear of said first structural fastening, at least one second structural fastening (30) for the support and articulation of an operating and crossbracing jack (18) which is likewise articulated on the other hand (29, 28) on said leg (17).

FIG.1

FIG.2

FIG. 3

FIG. 6

FIG.4

FIG.5

FIG.7

FIG.8

EP 0 324 683 B1

EP 0 324 683 B1

FIG.9

FIG.10

FIG.10a

FIG.11

FIG.12

FIG.13